# EUROPEAN PATENT SPECIFICATION

(11) **EP 4 585 116 B1**
(45) Date of publication and mention of the grant of the patent: **11.03.2026**
(21) Application number: 24172999.5
(22) Date of filing: 29.04.2024
(51) Int. Cl.: A47J 36/10, A47J 27/08

(54) **COOKING DEVICE**
KOCHGERÄT
APPAREIL DE CUISSON

(30) Priority: 11.01.2024 CN 202420073735 U
(43) Date of publication of application: 16.07.2025
(73) Proprietor: Foshan Shunde Midea Electrical Heating Appliances Manufacturing Co., Ltd., Foshan, Guangdong 528311 (CN)
(72) Inventor: Liu, Zikun, Shunde, Foshan 528311 (CN)
(74) Representative: RGTH

(56) References cited:
- CN-B- 112 167 964
- CN-U- 208 973 389
- US-B2- 6 705 209

## Description

### FIELD

The present disclosure relates to the technical field of kitchen appliances, and in particular, to a cooking device.

### BACKGROUND

During operation, a pressure cooker has a great pressure, resulting in high requirements for overall pressure resistance of the product. Effective buckling of a pot body and a pot lid is main guarantee of a pressure-resistance strength of the pressure cooker. In response to the pot lid and the pot body being not buckled in place, the pot lid and the pot body are screwed together, resulting in a decrease in the pressure-resistance strength of the pressure cooker. In this way, operation performance of the pressure cooker is affected, and even safety of the user is potentially threatened.
CN 112 167 964 B discloses a cooking utensil comprising a pot body assembly and a rotatable pot cover assembly. CN 208 973 389 U discloses a pressure cooking utensil with an easy-to-close cover. US 6 705 209 B2 discloses a pressure cooker, which includes a cooking pot and a lid removably attachable thereto by interlocking radially-extending circumferentially-spaced locking flanges on the cooking pot and lid.

### SUMMARY

Embodiments of the present disclosure provide a cooking device to solve at least one technical problem existing above.

According to the present invention, a cooking device according to claim 1 is provided.

For the cooking device, by providing the at least two first fool-proof structures and the at least two second fool-proof structures, alignment accuracy of the pot lid and the pot body is improved, which ensures that the pot lid and the pot body are screwed together in response to the pot lid and the pot body being buckled smoothly with each other, and thereby ensuring safe sealing of the cooking device, and avoiding the risk of an explosion caused by screwing of the cooking device in response to the cooking device being not buckled in place.

In some embodiments, each of the at least two first fool-proof structures comprises one of a fool-proof rib and a fool-proof notch, and each of the at least two second fool-proof structures comprises the other one of the fool-proof rib and the fool-proof notch.

In some embodiments, in a circumferential direction of the pot lid, a first angle and a second angle are defined by two connection lines respectively between two adjacent first fool-proof structures in the at least two first fool-proof structures and a center of the pot lid. The first angle is smaller than the second angle, and the first angle is in a range of (45°, 180°).

In some embodiments, each of the at least two first fool-proof structures is arranged in an intermediate position of a corresponding first pot tooth of the plurality of first pot teeth.

In some embodiments, a radial distance between an inner edge of the pot lid and an outer edge of the pot body is H1, the at least two first fool-proof structures are arranged in a radial direction of a center of the pot lid, and a radial length of each of the at least two first fool-proof structures is H2, H2>2×H1.

In some embodiments, in response to the pot lid being buckled with the pot body by using the one-to-one cooperation between the at least two first fool-proof structures and the at least two second fool-proof structures: a gap between a first fool-proof structure of the at least two first fool-proof structures and a second pot tooth adjacent to the first fool-proof structure in a rotation direction of the pot lid is H3, and a gap between a first pot tooth and a second pot tooth adjacent to the first pot tooth in the rotation direction of the pot lid is H4, H4>H3.

According to the invention, the pot lid assembly comprises a top covering on and be connected to the pot lid. The top lid has a protruding portion; the cooking device comprises a main body sleeved on the pot body and having a position-limiting groove. In a circumferential direction of the pot lid, a first angle and a second angle are defined by two connection lines respectively between two adjacent first fool-proof structures in the at least two first fool-proof structures and a center of the pot lid. The first angle is smaller than the second angle, and the protruding portion is arranged in a region within the first angle; and in response to the pot lid being correctly buckled with the pot body, the protruding portion is movably inserted in the position-limiting groove to limit a rotation angle of the pot lid in a range of [0°-30°].

In some embodiments, the two connection lines are a first connection line and a second connection line. A connection line between the protruding portion and the center of the pot lid is a third connection line. An angle comprised between the first connection line and the third connection line is a third angle, and an angle comprised between the second connection line and the third connection line is a fourth angle. The third angle is equal to or unequal to the fourth angle.

According to the invention, the position-limiting groove has a first position and a second position that are arranged in the circumferential direction of the pot lid. The position-limiting groove has a trigger key provided therein, the protruding portion is located at the first position and the trigger key is pressed by the protruding portion in response to the pot lid being buckled with the pot body by using the one-to-one cooperation between at least two first fool-proof structures and at least two second fool-proof structures, and the protruding portion is located at the second position and the trigger key is released from the protruding portion in response to the pot lid and the pot body being screwed and buckled in place.

In some embodiments, the pot lid has a first through hole, and the protruding portion has a second through hole; the pot lid assembly comprises a connecting member. The connecting member penetrates and connects the first through hole and the second through hole, to fixedly connect the top lid to the pot lid.

In some embodiments, the pot lid assembly comprises a float assembly and a sliding block assembly that are arranged on the pot lid. The float assembly comprises a float. The sliding block assembly comprises a pin shaft and a connection plate connected to the pin shaft. The pin shaft is connected to the pot body to limit the pot lid from rotating. The cooking device is configured to be that: in response to the float being bumped up, the float is connected to the connection plate to prevent the pin shaft from being disengaged from the pot body; and in a circumferential direction of the pot lid, a first angle and a second angle are defined by two connection lines respectively between two adjacent first fool-proof structures in the at least two first fool-proof structures and a center of the pot lid. The first angle is smaller than the second angle, and the float assembly and the sliding block assembly are in a region within the first angle.

In some embodiments, the float assembly further comprises a sealing pad; the float has a first groove, a first protruding block, a second protruding block, and a second groove that are sequentially arranged in a first direction. The sealing pad is sleeved in the second groove; the pot lid has a third through hole formed at an upper portion of the pot lid, the float movably penetrating the third through hole, to enable the second protruding block to be at least partially arranged in the third through hole. The connection plate has a groove hole formed at an end of the connection plate. A top of the float penetrates the groove hole. The first groove is in the groove hole, and the first protruding block is embedded in the groove hole in response to the float being bumped up, to limit a movement of the connection plate relative to the pot body.

In some embodiments, the sliding block assembly further comprises an elastic member; the connection plate has a groove hole formed at an end of the connection plate. The elastic member is sleeved at an end of the pin shaft away from the groove hole and abuts against the connection plate. The pot lid has a fourth through hole formed at a side portion of the pot lid. An end of the pin shaft close to the groove hole penetrates the fourth through hole, the pin shaft abuts against a side edge of a second pot tooth of the plurality of second pot teeth in response to the pot lid being correctly buckled with the pot body. In response to the float being bumped up, the pin shaft is position-limited and fixed to a second pot tooth of the plurality of second pot teeth to limit the pot lid from rotating, and in response to the float being not bumped up and the pot lid rotating, the pin shaft moves away from the second pot tooth of the plurality of second pot teeth by the elastic member.

In some embodiments, the pot lid assembly comprises a top lid covering and being connected to the pot lid, an accommodation space is formed between the top lid and the pot lid, and the accommodation space accommodating the sliding block assembly and the float assembly.

Additional aspects and advantages of the present disclosure will be provided at least in part in the following description, or will become apparent at least in part from the following description, or may be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic perspective exploded view of a cooking device according to an embodiment of the present disclosure.
FIG. 2 is a schematic perspective assembly view of a cooking device according to an embodiment of the present disclosure.
FIG. 3 is a schematic structural view of an angle comprised between two adjacent first fool-proof structures according to an embodiment of the present disclosure.
FIG. 4 is a schematic structural view of a position where a first fool-proof structure is located in a first pot tooth according to an embodiment of the present disclosure.
FIG. 5 is a schematic structural view of a distance between a pot lid and a pot body according to an embodiment of the present disclosure.
FIG. 6 is another schematic perspective assembly view of a cooking device according to an embodiment of the present disclosure.
FIG. 7 is a cross-sectional view of the cooking device of FIG. 6.
FIG. 8 is an enlarged view of part A of FIG. 7.
FIG. 9 is a schematic view of a rotation of a pot lid according to an embodiment of the present disclosure.
FIG. 10 is another schematic view of a rotation of a pot lid according to an embodiment of the present disclosure.
FIG. 11 is another cross-sectional view of a cooking device according to an embodiment of the present disclosure.
FIG. 12 is a schematic structural view of alignment and buckling of a pot lid and a pot body according to an embodiment of the present disclosure.
FIG. 13 is a schematic structural view where a pot lid and a pot body are screwed and buckled in place according to an embodiment of the present disclosure.
FIG. 14 is a cross-sectional view of a cooking device in the related technologies, which is not part of the present invention.

Reference numerals of main components in the drawings are described below.
cooking device 100, pot lid assembly 10, pot body 20, main body 30, pot lid 11, float assembly 12, sliding block assembly 13, top lid 14, accommodation space 15, second pot tooth 21, second fool-proof structure 22, position-limiting groove 31, first pot tooth 111, first fool-proof structure 112, third through hole 113, fourth through hole 114, first through hole 115, float 121, sealing pad 122, connection plate 131, pin shaft 132, elastic member 133, protruding portion 141, trigger key 311, first groove 1211, first protruding block 1212, second protruding block 1213, second groove 1214, groove hole 1311, and second through hole 1411.

### DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the description of the present disclosure, it needs to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure. In the description of the present disclosure, "a plurality of" means two or more, unless otherwise specifically defined.

In the description of the embodiments of the present disclosure, it needs to be noted that, unless otherwise clearly specified and limited, technical terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the present disclosure can be understood according to specific circumstances.

In the present disclosure, unless expressly stipulated and defined otherwise, the first feature "on" or "under" the second feature may comprise that the first feature is in direct contact with the second feature, or further comprise that the first and second features are in indirect contact through other features between the first and second features. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present disclosure are provided below. In order to simplify the description of the present disclosure, components and arrangements of specific examples are described herein. These specific examples are merely for the purpose of illustration, rather than limiting the present disclosure.

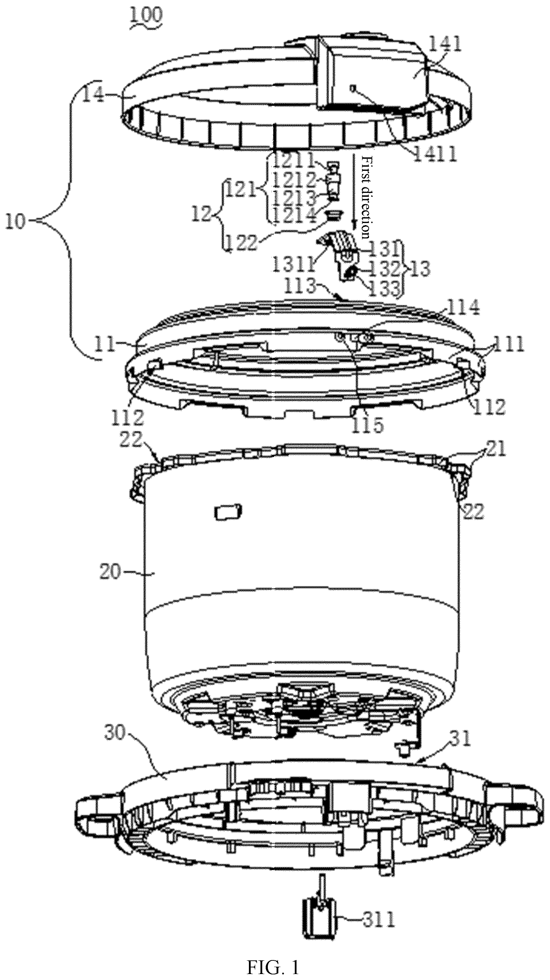

Referring to FIG. 1 to FIG. 2, an embodiment of the present disclosure provides a cooking device 100. The cooking device 100 comprises a pot lid assembly 10 and a pot body 20. The pot lid assembly 10 comprises a pot lid 11. The pot lid 11 has a plurality of first pot teeth 111. At least two of the plurality of first pot teeth 111 are each formed with a first fool-proof structure 112. The pot body 20 has a plurality of second pot teeth 21. At least two of the plurality of second pot teeth 21 are each formed with a second fool-proof structure 22. The cooking device 100 is configured to enable the pot lid 11 to be buckled with the pot body 20 by using a one-to-one cooperation between at least two first fool-proof structures 112 and at least two second fool-proof structures 22.

The cooking device 100 improves alignment accuracy of the pot lid 11 and the pot body 20 by providing the at least two first fool-proof structures 112 and the at least two second fool-proof structures 22, which ensures that the pot lid 11 and the pot body 20 are screwed together in response to the pot lid 11 and the pot body 20 being buckled smoothly with each other, and further ensures safe sealing of the cooking device 100, avoiding the risk of an explosion caused by screwing of the cooking device 100 in response to the cooking device 100 being not buckled in place.

According to the present invention, the pot lid 11 has a plurality of first pot teeth 111 arranged in a circumferential direction of an outer edge of the pot lid 11, and the pot body 20 has a plurality of second pot teeth 21 arranged in a circumferential direction of an outer edge of the pot body 20, which allows for a one-to-one arrangement between the plurality of first pot teeth 111 and the plurality of second pot teeth 21 to ensure a stable connection between the pot lid 11 and the pot body 20, further improving overall stability and safety of the cooking device 100.

In an embodiment, as illustrated in FIG. 1, the first fool-proof structure 112 is respectively arranged in the at least two first pot teeth 111 and faces towards a center of the pot lid 11, allowing the at least two first fool-proof structures 112 to protrude towards the center of the pot lid 11 to form a protruding distance. Meanwhile, the second fool-proof structure 22 is respectively arranged in the at least two second pot teeth 21 and faces towards a center of the pot body 20, allowing the at least two second fool-proof structures 112 to be recessed towards the center of the pot body 20 to form a recessed distance. The recessed distance is slightly greater than the protruding distance to ensure a matching arrangement between the first fool-proof structure 112 and the second fool-proof structure 22. In this way, it is ensured that the pot lid 11 is correctly buckled with the pot body 20. Further, the stable connection between the pot lid 11 and the pot body 20 is ensured.

It can be understood that the recessed distance is slightly greater than the protruding distance. With a one-to-one alignment between the first fool-proof structure 112 and the second fool-proof structure 22, it is ensured that the first fool-proof structure 112 can penetrate the second fool-proof structure 22 through the recessed distance and is located below the second fool-proof structure 22, to ensure that the pot lid 11 is correctly buckled with the pot body 20. Then, the pot lid 11 is rotated to a predetermined angle, which can ensure safe operation of the cooking device 100.

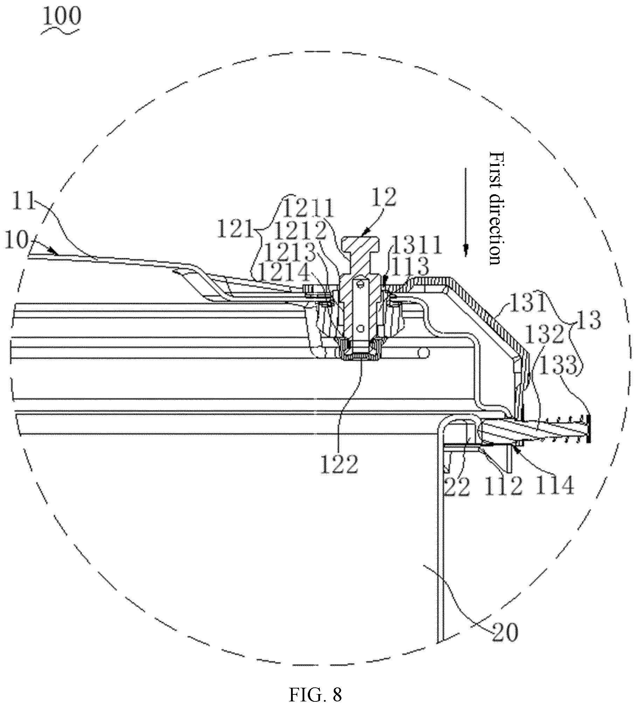

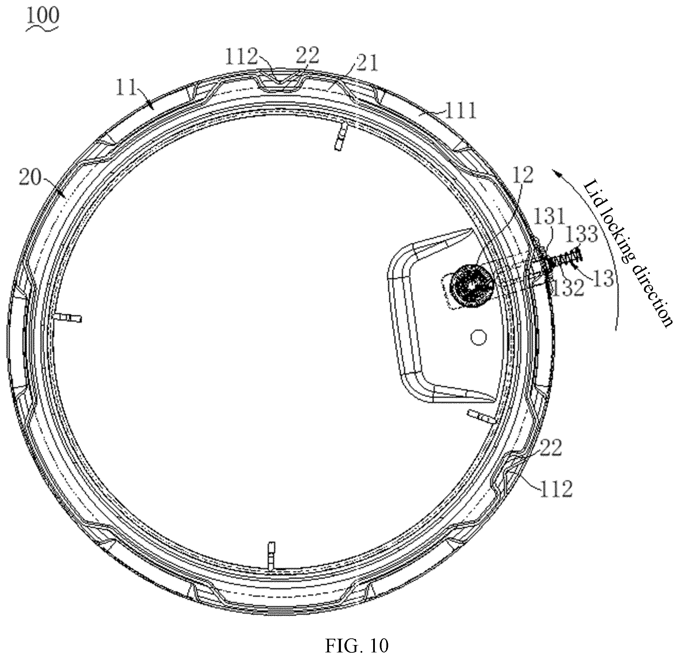

That is, when each of the at least two first fool-proof structures 112 penetrates the at least two second fool-proof structures 22 from top to bottom and is located below the at least two second fool-proof structures 22 (as illustrated in FIG. 8 and FIG. 10), the at least two first fool-proof structures 112 and the at least two second fool-proof structures 22 are aligned in a one-to-one correspondence, allowing the plurality of first pot teeth 111 and the plurality of second pot teeth 21 to be aligned and buckled with each other in a one-to-one correspondence. At this time, the pot lid 11 is correctly buckled with the pot body 20, and the stable connection between the pot lid 11 and the pot body 20 can be ensured by screwing.

Similarly, when cooking of the cooking device 100 ends, the pot lid 11 and the pot body 20 also need to rotate to a position where the at least two first fool-proof structures 112 and the at least two second fool-proof structures 22 are in one-to-one alignment, and then the pot lid 11 of the cooking device 100 can be opened.

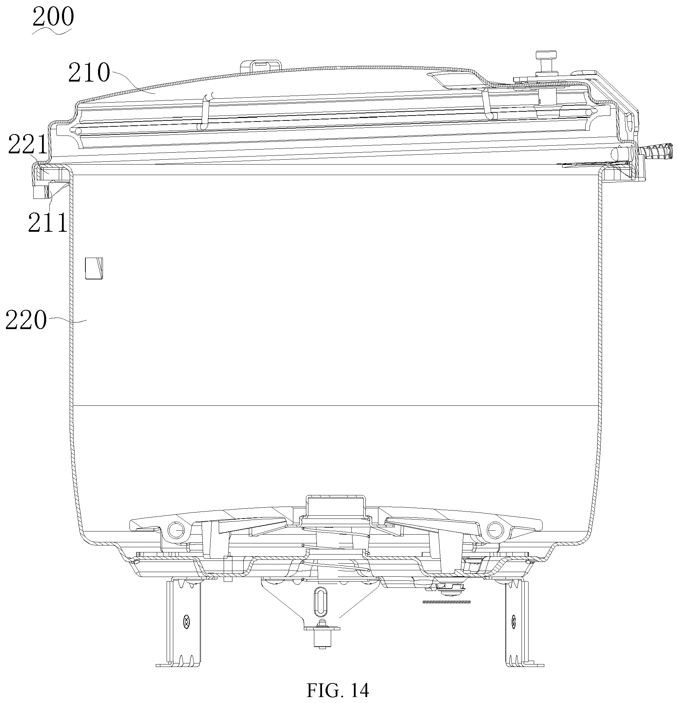

Referring to FIG. 14, in the related technologies, the cooking device 200 is only provided with a pair of first fool-proof structures 211 and second fool-proof structures 221 that are engaged and connected with each other. In this way, even if the first fool-proof structure 211 is correctly aligned with the second fool-proof structure 221 at one side (for example, a left side of FIG. 14), and the pot lid 210 is not buckled smoothly with the pot body 220 at another side (for example, a right side of FIG. 14), for example, when the pot lid 210 inclines upwards and deviates from the pot body 220 to generate a gap, generation of explosion risk in the cooking device 200 is still caused, i.e., the cooking device 200 in the related technologies cannot determine whether the cooking device 200 is correctly buckled in place through the first fool-proof structure 211 being lower than the second fool-proof structure 221 and a correct alignment of the first fool-proof structure 211 and the second fool-proof structure 221.

In the present disclosure, as illustrated in FIG. 1, by providing two pairs of first fool-proof structures 211 and second fool-proof structures 221 that are engaged and connected with each other, the at least two first fool-proof structures 112 are each made lower than the at least two corresponding second fool-proof structures 22 and in one-to-one correct alignment with the at least two corresponding second fool-proof structures 22, which can allow the cooking device 100 to ensures flat buckling of the pot lid 11 and the pot body 20 at a proper spacing. Therefore, it is ensured that the cooking device 100 has a safe and stable connection and good safety.

In an embodiment, the first fool-proof structure 112 may be a fool-proof rib. For example, the fool-proof rib may be a triangular rib and may be used for position-limiting and fool-proofing, to reduce an error rate of buckling of the pot lid 11 and the pot body 20. In this way, the stable connection between the pot lid 11 and the pot body 20 is ensured.

In an embodiment, the second fool-proof structure 22 may be a fool-proof notch. For example, the fool-proof notch may be a quadrangle recessed inwards to form a position-limiting fool-proof structure with the first fool-proof structure 112. In this way, buckling accuracy of the pot lid 11 and the pot body 20 is improved, to reduce wear generated during the connection of the pot lid 11 and the pot body 20, and normal operation of the cooking device 100 is further ensured.

In other embodiments, the first fool-proof structure 112 may also be a fool-proof rib in another shape, and the second fool-proof structure 22 may also be a fool-proof notch matching with the fool-proof rib, to ensure the stability of the connection between the pot lid 11 and the pot body 20, which is not limited herein.

In an embodiment, the at least two first fool-proof structures 112 have a one-to-one cooperation with the at least two second fool-proof structures 22, enabling the pot lid 11 to be buckled with the pot body 20. It can be understood that a first fool-proof structure 112 at a left side of FIG. 1 is aligned with and located below a second fool-proof structure 22 at the left side of FIG. 1, and a first fool-proof structure 112 at a right side of FIG. 1 is aligned with and located below a second fool-proof structure 22 at the right side of FIG. 1, allowing the plurality of first pot teeth 111 to be respectively one-to-one buckled with the plurality of second pot teeth 21 to ensure that the pot lid 11 is buckled smoothly with the pot body 20. In this way, it is ensured that the cooking device 100 is normally screwed to improve safety.

That is, in response to the pot lid 11 being buckled smoothly with the pot body 20, the cooking device 100 is in a buckled state under normal use, to ensure safe use of the cooking device 100.

In other embodiments, a buckling state of the cooking device 100 under abnormal operation comprises, but is not limited to, the following situations. For example, the cooking device 100 can be used during user's dining. At this time, the pot lid 11 can be placed at any position above the pot body 20, and it is not restricted whether the pot lid 11 is buckled smoothly with the pot body 20. In this way, the cooking device 100 is convenient and practical.

For example, in an example, the first fool-proof structure 112 at the left side of FIG. 1 is aligned with and located below the second fool-proof structure 22 at the left side of FIG. 1, but the first fool-proof structure 112 at the right side of FIG. 1 is not aligned with the second fool-proof structure 22 at the right side of FIG. 1, i.e., the first fool-proof structure 112 at the right side of FIG. 1 is not located below the second fool-proof structure 22 at the right side of FIG. 1. At this time, the cooking device 100 is in an abnormal operation state, i.e., the pot lid 11 is not buckled smoothly with the pot body 20. When the pot lid 11 is forcibly rotated for cooking, there is an explosion risk.

In another example, the first fool-proof structure 112 at the right side of FIG. 1 is aligned with and located below the second fool-proof structure 22 at the right side of FIG. 1, but the first fool-proof structure 112 at the left side of FIG. 1 is not aligned with the second fool-proof structure 22 at the left side of FIG. 1, i.e., the first fool-proof structure 112 at the left side of FIG. 1 is not located below the second fool-proof structure 22 at the left side of FIG. 1. At this time, the cooking device 100 is in the abnormal operation state, i.e., the pot lid 11 is not buckled smoothly with the pot body 20. When the pot lid 11 is forcibly rotated for cooking, there is an explosion risk.

In another embodiment, each of the at least two first fool-proof structures 112 is not aligned with each of the at least two second fool-proof structures 22, i.e., the at least two first fool-proof structures 112 are each not located below the at least two second fool-proof structures 22. At this time, the cooking device 100 is in the abnormal operation state, i.e., a condition where the cooking device 100 performs pressure cooking is not satisfied.

In an embodiment, referring to FIG. 1, six or seven first pot teeth 111 may be provided and may be configured to be buckled outside the second pot teeth 21 and screwed to bear cooking pressure in the cooking device 100.

Similarly, the number of the second pot teeth 21 is matched with the number of the first pot teeth 111, and the second pot tooth 21 is aligned with the first pot tooth 111. In this way, the second pot tooth 21 can be used for being matched and buckled with and screwed with the first pot tooth 111 to bear the cooking pressure in the cooking device 100.

That is, the first pot tooth 111 may cooperate with and abut against the second pot tooth 21 to improve an overall pressure-bearing strength of the cooking device 100, ensuring the safety of the cooking device 100.

In other embodiments, other numbers of the first pot teeth 111 and the second pot teeth 21 may also be provided, to ensure that the cooking device 100 is smooth in bucking and safe to use, which is not limited herein.

In an embodiment, the cooking device 100 may be an electric pressure cooker, a gas-heated pressure cooker, an induction-heated pressure cooker, or other types of pressure cookers, without specific limitation herein.

In some embodiments, the first fool-proof structure 112 comprises one of a fool-proof rib and a fool-proof notch, and the second fool-proof structure 22 comprises the other one of the fool-proof rib and the fool-proof notch.

In this way, it is ensured that the first fool-proof structure 112 cooperates with and is aligned with the second fool-proof structure 22, which ensures the accurate alignment and stable connection between the pot lid 11 and the pot body 20, and further improves the safety of the cooking device 100.

In an exemplary embodiment of the present disclosure, as illustrated in FIG. 1, the first fool-proof structure 112 may be a fool-proof rib, and the second fool-proof structure 22 may be a fool-proof notch, to ensure accuracy of alignment and buckling of the fool-proof rib and the fool-proof notch. In this way, efficiency of correct buckling of the pot lid 11 and the pot body 20 is improved, and safe and stable operation of the cooking device 100 is further ensured.

In another embodiment, the first fool-proof structure 112 may also be a fool-proof notch, and the second fool-proof structure 22 may also be a fool-proof rib (not shown) to ensure the accuracy of the alignment and buckling of the fool-proof notch and the fool-proof rib. In this way, the efficiency of the correct buckling of the pot lid 11 and the pot body 20 is improved, and the safe and stable operation of the cooking device 100 is further ensured.

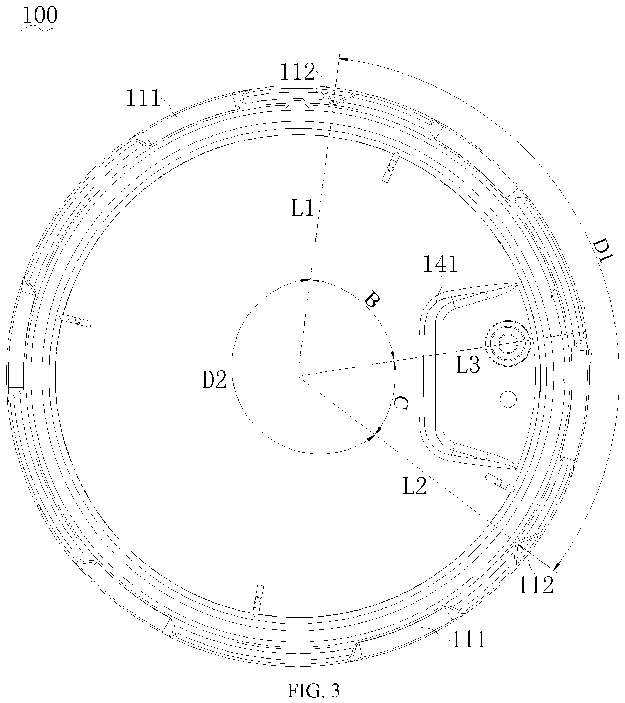

Referring to FIG. 3, according to the present invention, in a circumferential direction of the pot lid 11, a first angle D1 and a second angle D2 are defined by two connection lines respectively between two adjacent first fool-proof structures 112 in the at least two first fool-proof structures 112 and a center of the pot lid 11. The first angle D1 is smaller than the second angle D2, and the first angle D1 may be in a range of (45°, 180°).

In this way, a fool-proof effect of the pot lid 11 and the pot body 20 during their buckling connection is improved, which ensures the connection stability of the pot lid 11 and the pot body 20 and further ensures the safe sealing of the cooking device 100.

In an exemplary embodiment of the present disclosure, in an embodiment, the first angle D1 and the second angle D2 are defined by the two connection lines respectively between the two adjacent first fool-proof structures 112 in the at least two first fool-proof structures 112 and the center of the pot lid 11. The first angle D1 is smaller than the second angle D2, and the first angle D1 is in the range of (45°, 180°). In this way, a fool-proof rib with a proper distance is ensured to be formed in the circumferential direction of the pot lid 11. Therefore, the fool-proof position-limiting effect of the pot lid 11 and the pot body 20 during their buckling connection is improved, and the safety connection between the pot lid 11 and the pot body 20 is further ensured.

For example, in some examples, the first angle D1 may be 60°, 80°, 90°, 100°, 120°, 135°, 150°, or other values ranging from 45° to 180°.

In an embodiment, in response to the first angle D1 being smaller than or equal to 45°, the first angle D1 is too small, allowing a distance between two adjacent first fool-proof structures 112 to be too small to generate a good fool-proof alignment effect, i.e., at this time, the two first fool-proof structures 112 are equivalent to the effect of one first fool-proof structure 112, which cannot ensure an alignment and buckling effect on a far side of the pot lid 11 in the circumferential direction of the pot lid 11, enabling an improvement in the fool-proof effect of the pot lid 11 and the pot body 20 during their buckling connection to be unobvious.

In an embodiment which is not covered by the appended set of claims, in response to the first angle D1 being greater than or equal to 180°, the first angle D1 is too large, allowing the distance between the two adjacent first fool-proof structures 112 to be too large to be easily aligned and buckled in place.

Preferably, the first angle D1 is in a range of (45°, 135°), allowing the two adjacent first fool-proof structures 112 to be easily aligned and buckled in place. Meanwhile, a float assembly 12 and a sliding block assembly 13 are arranged in a small angle range defined by the at least two first fool-proof structures 112, i.e., as illustrated in FIG. 3 and FIG. 8, an acute angle is defined respectively between the float assembly 12 and the sliding block assembly 13 and the at least two first fool-proof structures 112, allowing the first fool-proof structure 112 to be closer to the float assembly 12 and the sliding block assembly 13, (for example, the angle B and the angle C are each smaller than 90°). Therefore, the fool-proof position-limiting effect of the pot lid 11 and the pot body 20 during their buckling connection is further enhanced.

It can be understood that when the float assembly 12 and the sliding block assembly 13 are immobilized, the closer the first fool-proof structure 112 is, the less likely the first fool-proof structure 112 is to generate a relative movement, i.e., the first fool-proof structure 112 close to the float assembly 12 and the sliding block assembly 13 cannot be rotated to an alignment position for opening the pot lid 11, which ensures the stable connection between the pot lid 11 and the pot body 20.

In an embodiment, in response to the first angle D1 being in the range of (45°, 135°), the first angle D1 may be 60°, 75°, 80°, 90°, 100°, 115°, 120°, or other values ranging from 45° to 135°.

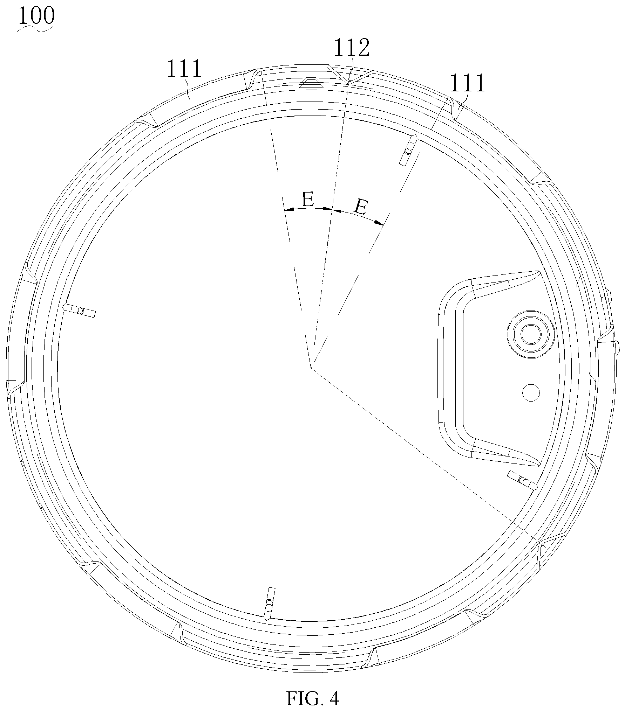

Referring to FIG. 4, in some embodiments, each of the at least two first fool-proof structures 112 is arranged in an intermediate position of a corresponding first pot tooth 111 of the plurality of first pot teeth 111.

In this way, connection stability of the first fool-proof structure 112 on the first pot tooth 111 is improved. Therefore, the fool-proof effect of the pot lid 11 and the pot body 20 during their buckling connection is ensured.

In an exemplary embodiment of the present disclosure, in an embodiment, as illustrated in FIG. 4, a square groove may be dug in an intermediate position of the at least two first pot teeth 111, allowing the first fool-proof structure 112 to be in a middle of the square groove and to protrude towards the center of the pot lid 11. By ensuring connection stability of edges of the first pot teeth 111 at two sides of the first fool-proof structure 112 and the pot lid 11, it can be ensured that the first fool-proof structure 112 is stably located in the intermediate position of the first pot tooth 111. Therefore, the connection stability of the pot lid 11 and the pot body 20 is improved.

It can be understood that when the first fool-proof structure 112 is arranged at an edge position of the first pot tooth 111 in the circumferential direction of the pot lid 11, the first fool-proof structure 112 is easy to generate collision and abrasion during multiple times of buckling of the pot lid 11 and the pot body 20. In this way, the fool-proof effect of the buckling and connection of the pot lid 11 and the pot body 20 is lowered, and the safety of the cooking device 100 is further reduced.

That is, the first fool-proof structure 112 is arranged in the intermediate position of the first pot tooth 111, allowing the fool-proof effect of the buckling and connection of the pot lid 11 and the pot body 20 to be better. In this way, buckling efficiency and accuracy of the pot lid 11 and the pot body 20 are improved, and the safe operation of the cooking device 100 is further ensured.

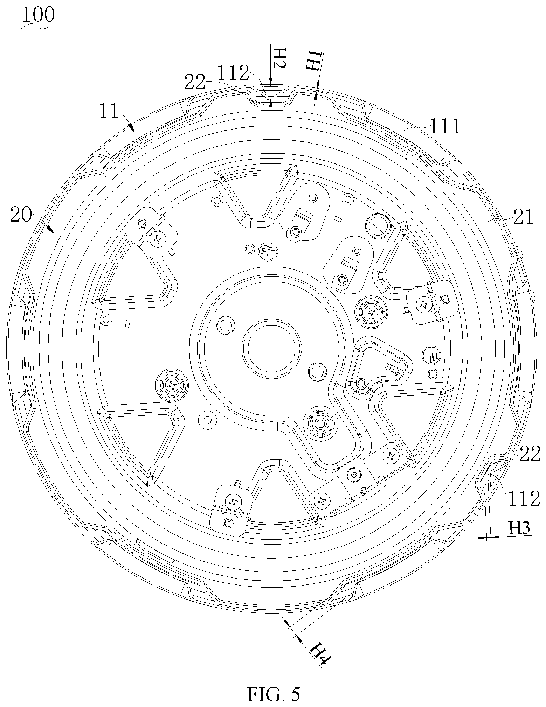

Referring to FIG. 5, in some embodiments, a radial distance between an inner edge of the pot lid 11 and an outer edge of the pot body 20 is H1. The at least two first fool-proof structures 112 are arranged in a radial direction of a center of the pot lid 11. A radial length of each of the at least two first fool-proof structures 112 is H2, H2>2×H1.

In this way, it is ensured that the first fool-proof structure 112 cooperates with and is connected to the second fool-proof structure 22 in response to the pot lid 11 being buckled with and connected to the pot body 20. In this way, the connection stability between the pot lid 11 and the pot body 20 is ensured.

In an exemplary embodiment of the present disclosure, in an embodiment, the radial distance between the inner edge of the pot lid 11 and the outer edge of the pot body 20 is H1, which can ensure that the pot lid 11 and the pot body 20 rotate freely in response to the correct buckling of the pot lid 11 and the pot body 20, reducing a friction loss generated between the inner edge of the pot lid 11 and the outer edge of the pot body 20. Therefore, it is ensured that the pot lid 11 is stably connected to the pot body 20.

In an embodiment, the first fool-proof structure 112 is arranged in the radial direction of the center of the pot lid 11, and the radial length H2 of the first fool-proof structure 112 is greater than 2H1. On the one hand, it can be avoided that a length of the first fool-proof structure 112 is too short, causing the first fool-proof structure 112 to penetrate into a gap between the inner edge of the pot lid 11 and the outer edge of the pot body 20 because of uneven buckling, which cannot exhibit an effective fool-proof effect.

On the other hand, the radial length H2 of the first fool-proof structure 112 is greater than 2H1, i.e., the radial length H2 of the first fool-proof structure 112 is long enough to both ensure that the first fool-proof structure 112 stably penetrates the second fool-proof structure 22 and that the first fool-proof structure 112 is located underneath the second fool-proof structure 22 and abuts against the outer edge of the pot body 20 during screwing. In this way, the connection stability between the pot lid 11 and the pot body 20 is ensured, and the radial length H2 of the first fool-proof structure 112 is prevented from being too short to abut against the outer edge of the pot body 20. Further, an effective air pressure environment cannot be generated inside the cooking device 100. Meanwhile, a safety risk exists.

Referring to FIG. 5, in some embodiments, in response to the pot lid 11 being buckled with the pot body 20 by using the one-to-one cooperation between the at least two first fool-proof structures 112 and the at least two second fool-proof structures 22: a gap between a first fool-proof structure 112 of the at least two first fool-proof structures 112 and a second pot tooth 21 adjacent to the first fool-proof structure 112 in a rotation direction of the pot lid 11 is H3; and a gap between a first pot tooth 111 and a second pot tooth 21 adjacent to the first pot tooth 111 in the rotation direction of the pot lid 11 is H4, H4>H3.

In this way, the fool-proof effect is further enhanced, and the stable connection between the pot lid 11 and the pot body 20 is ensured.

In an exemplary embodiment of the present disclosure, in an embodiment, as illustrated in FIG. 5, the rotation direction of the pot lid 11 may be a clockwise rotation direction along the pot lid 11 or an anticlockwise rotation direction along the pot lid 11.

The first fool-proof structure 112 is located in an intermediate position of the second fool-proof structure 22, i.e., in response to enabling the pot lid 11 to be buckled with the pot body 20 by using the one-to-one cooperation between the at least two first fool-proof structures 112 and the at least two second fool-proof structures 22, the first fool-proof structure 112 is centrally located below the second fool-proof structure 22, allowing a left gap H3 defined by the first fool-proof structure 112 and its adjacent second pot tooth 21 to be equal to a right gap H3 defined by the first fool-proof structure 112 and the adjacent second pot tooth 21.

Similarly, in response to enabling the pot lid 11 to be buckled with the pot body 20 by using the one-to-one cooperation between the at least two first fool-proof structures 112 and the at least two second fool-proof structures 22, the first pot tooth 111 is centrally located in a gap defined by the two adjacent second pot teeth 21, allowing a left gap H4 defined by the first pot tooth 111 and the second pot tooth 21 to be equal to a right gap H4 defined by the first pot tooth 111 and the second pot tooth 21. In this way, it is ensured that the pot lid 11 is stably connected to the pot body 20 after being screwed together.

In an embodiment, H4>H3. It can be ensured that in response to the first pot tooth 111 and the second pot tooth 21 being screwed and buckled in place and abutting against each other, each of the at least two first fool-proof structures 112 is offset from each of the at least two second fool-proof structures 22, i.e., the first fool-proof structure 112 and the second fool-proof structure 22 are in a non-aligned state, which further enhances the fool-proof position-limiting effect of the pot lid 11 and the pot body 20 after the pot lid 11 and the pot body 20 are screwed together.

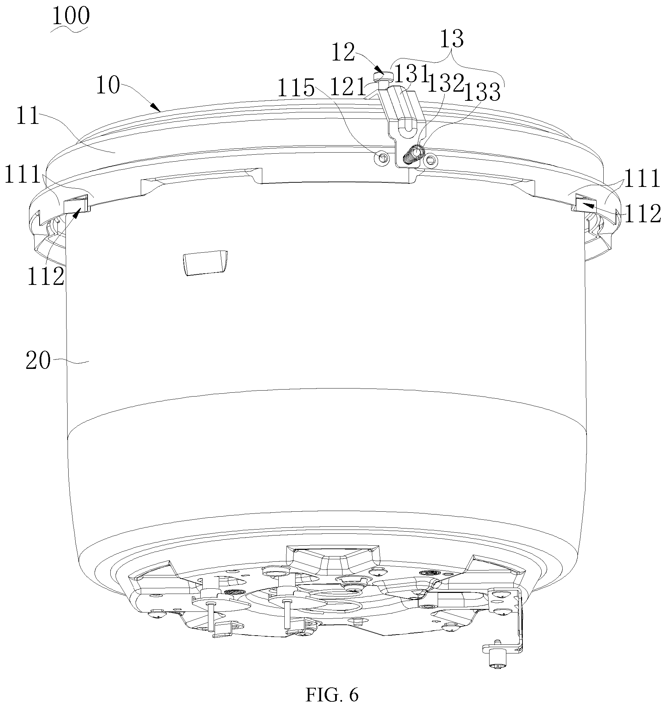

Referring to FIG. 6 to FIG. 8, in some embodiments, the pot lid assembly 10 comprises a float assembly 12 and a sliding block assembly 13. The float assembly 12 comprises a float 121. The sliding block assembly 13 comprises a connection plate 131 and a pin shaft 132. The connection plate 131 is connected to the pin shaft 132. The pin shaft 132 is connected to the pot body 20 to limit the pot lid from rotating 11. The cooking device 100 is configured to be that: in response to the float 121 being bumped up, the float 121 is connected to the connection plate 131 to prevent the pin shaft 132 from being disengaged from the pot body 20. In a circumferential direction of the pot lid 11, a first angle D1 and a second angle D1 are defined by two connection lines respectively between two adjacent first fool-proof structures 112 in the at least two first fool-proof structures 112 and a center of the pot lid 11. The first angle D1 is smaller than the second angle D2, and the float assembly 12 and the sliding block assembly 13 are in a region within the first angle D1.

In this way, a movement of the pot lid 11 is limited through the float assembly 12 and the sliding block assembly 13, which improves the cooking safety.

In an exemplary embodiment of the present disclosure, in an embodiment, the float assembly 12 is equivalent to a position-limiting member, which can restrict a movement of the connection plate 131 and a movement of the pin shaft 132 by limiting a movement of the sliding block assembly 13, enabling the pin shaft 132 to be connected to the pot body 20 to limit the pot lid from rotating 11.

It can be understood that when the float 121 is bumped up, i.e., in response to pressure being generated in the cooking device 100, the float 121 floats upwards to penetrate and fix the connection plate 131, enabling the pin shaft 132 to be immovable. In this way, the pin shaft 132 cannot be separated from the pot body 20, and the pot lid 11 cannot be further rotated, which ensures cooking safety.

In an embodiment, the pin shaft 132 may abut against a side edge of the second pot tooth 21 of the pot body 20 (for example, a side edge of the second pot tooth 21 in the circumferential direction of the pot lid 11), or may abut against at other positions, to ensure that the pin shaft 132 can be stably connected to the pot body 20, which is not limited herein.

In an embodiment, the first angle D1 is in a range of (45°, 180°). The first angle D1 is smaller than the second angle D2. Moreover, angles (such as an angle B and an angle C) defined by the two connection lines respectively between each of the first fool-proof structure and 112 and the float assembly 12 and the center of the pot lid 11 are each smaller than 90°. At this time, the float assembly 12 and the sliding block assembly 13 are located between the two adjacent first fool-proof structures 112. As illustrated in FIG. 3 and FIG. 8, in an acute angle range respectively defined by the float assembly 12 and the sliding block assembly 13 and the at least two first fool-proof structures 112, the fool-proof position-limiting effect of the pot lid 11 and the pot body 20 during their buckling and connection is ensured, i.e., it can be ensured that the pot lid 11 is quickly and stably buckled with the pot body 20, enabling the fool-proof effect to be good.

In addition, the first angle D1 is an acute angle, allowing the first fool-proof structure 112 to be close to the float assembly 12 and the sliding block assembly 13. In this way, a self-locking function defined by cooperation of the float assembly 12 and the sliding block assembly 13 is made more efficient, and the connection stability of the pot lid 11 and the pot body 20 is further ensured.

It can be understood that when the float assembly 12 and the sliding block assembly 13 are immobilized, the closer the first fool-proof structure 112 is, the less likely the first fool-proof structure 112 is to generate a relative movement, i.e., the first fool-proof structure 112 close to the float assembly 12 and the sliding block assembly 13 cannot be rotated to an alignment position for opening the pot lid 11, which ensures the stable connection between the pot lid 11 and the pot body 20.

Referring to FIG. 6 to FIG. 8, in some embodiments, the float assembly 12 further comprises a sealing pad 122. The float 121 has a first groove 1211, a first protruding block 1212, a second protruding block 1213, and a second groove 1214 that are sequentially arranged in a first direction. The sealing pad 122 is sleeved in the second groove 1214. The pot lid 11 has a third through hole 113 formed at an upper portion of the pot lid 11. The float 121 is configured to movably penetrate the third through hole 113, to enable the second protruding block 1213 to be at least partially arranged in the third through hole 113. The connection plate 131 has a groove hole 1311 formed at an end of the connection plate 131. A top of the float 121 penetrates the groove hole 1311. The first groove 1211 is located in the groove hole 1311. The first protruding block 1212 is embedded in the groove hole 1311 in response to the float 121 being bumped up, to limit a movement of the connection plate 131 relative to the pot body 20.

In this way, by providing the float assembly 12 and the sliding block assembly 13, the sealing cooking effect and the safe operation environment in the cooking device 100 are ensured, with good practicability.

In an exemplary embodiment of the present disclosure, in an embodiment, referring to FIG. 1 and FIG. 8, in response to no pressure being generated in the cooking device 100, a permanent arrangement position of the first groove 1211 is penetrating in the groove hole 1311 of the sliding block assembly 13 (not shown). At this time, a diameter of the first groove 1211 is small, which can satisfy that the sliding block assembly 13 moves in the radial direction of the center of the pot lid 11, i.e., the connection plate 131 is movably connected to the float 121 (as illustrated in FIG. 6), enabling the pot lid 11 to rotate freely.

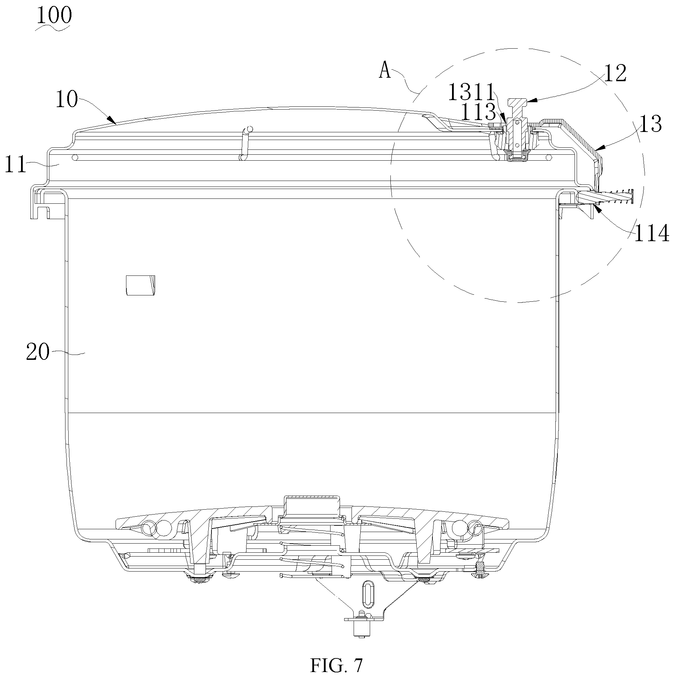

In another embodiment, as illustrated in FIG. 7, when pressure is generated in the cooking device 100, the float 121 floats upwardly, and the first groove 1211 is located above the third through hole 113 and outside the groove hole 1311. At this time, the first protruding block 1212 is connected to the groove hole 1311 in a matched manner.

In an embodiment, as illustrated in FIG. 8, the first protruding block 1212 has the largest diameter in a first direction on the float 121 for blocking the groove hole 1311 of the sliding block assembly 13 to control the movement of the sliding block assembly 13, which ensures the normal operation of the cooking device 100.

In an embodiment, the second protruding block 1213 is at least partially located in the third through hole 113, which can ensure that the float 121 does not fall into a cooking cavity of the pot body 20. The second protruding block 1213 may be configured to connect the first protruding block 1212 and the second groove 1214 to ensure the overall stability of the float 121.

In an embodiment, the second groove 1214 may be sleeved with the sealing pad 122 to ensure that the float 121 floats upwards when the air pressure is generated inside the cooking device 100, enabling the sealing pad 122 to be limited to abut against an upper portion of an inner side of the pot lid 11 and the float 121 not to be disengaged from a top of the third through hole 113 as a whole. Therefore, it is ensured that the cooking device 100 can repeat safety operation.

It can be understood that, in an embodiment, when the float assembly 12 is equivalent to the position-limiting member and when the air pressure is generated in the cooking device 100, the float assembly 12 floats up integrally, which allows a portion where the diameter of the float 121 is maximum (i.e., the first protruding block 1212) to be limited in the groove hole 1311 of the sliding block assembly 13. In this way, the movement of the sliding block assembly 13 is limited to enable the lid 11 not to rotate. Therefore, the safe operation environment is provided.

In addition, when the float assembly 12 is equivalent to the blocking member to generate the air pressure in the cooking device 100, the float assembly 12 floats up integrally, which also allows the sealing pad 122 to float upwards and to abut against the upper portion of the inner side of the pot lid 11 to seal the third through hole 113. In this way, the air pressure in the cooking device 100 is continuously increased, which ensures maturity and cooking effect of food material.

In another embodiment, when no air pressure is generated in the cooking device 100, the connection plate 131 of the sliding block assembly 13 is movably connected to the float 121, which can realize that the pot lid 11 rotates freely and is practical and safe.

With reference to FIG. 8, FIG. 9, and FIG. 10, in some embodiments, the sliding block assembly 13 further comprises an elastic member 133. The connection plate 131 has a groove hole 1311 formed at an end of the connection plate 131. The elastic member 133 is sleeved at an end of the pin shaft 132 away from the groove hole 1311 and abuts against the connection plate 131. The pot lid 11 has a fourth through hole 114 formed at a side portion of the pot lid 11. An end of the pin shaft 132 close to the groove hole 13111 penetrates the fourth through hole 114. The pin shaft 132 abuts against a side edge of a second pot tooth 21 of the plurality of second pot teeth 21 in response to the pot lid 11 being correctly buckled with the pot body 20. The pin shaft 132 is configured to: in response to the float 121 being bumped up, be position-limited and fixed to a second pot tooth 21 of the plurality of second pot teeth 21 to limit the pot lid from rotating 11; and in response to the float 121 being not bumped up and the pot lid 11 rotating, move away from the second pot tooth 21 of the plurality of second pot teeth 21 by the elastic member 133.

In this way, a timely rotation of the pot lid 11 can be realized through the sliding block assembly 13, which improves the safety of the cooking device 100, and further improves a user's cooking experience.

In an exemplary embodiment of the present disclosure, in an embodiment, as illustrated in FIG. 8, the connection plate 131 is matched and connected with an upper portion and a side portion of the pot lid 11 to ensure that the float assembly 12 is movably connected to the sliding block assembly 13, ensuring safety of lid opening of the cooking device 100.

It can be understood that the groove hole 1311 is in an alignment connection with the third through hole 113 located above the pot lid 11 through the float 121 to control the movement of the sliding block assembly 13, and the pin shaft 132 at least partially penetrates the fourth through hole 114 in the side of the pot lid 11 and abuts against the side edge of the second pot tooth 21 to control the pot lid 11 to rotate in time, which ensures the safe lid opening of the cooking device 100.

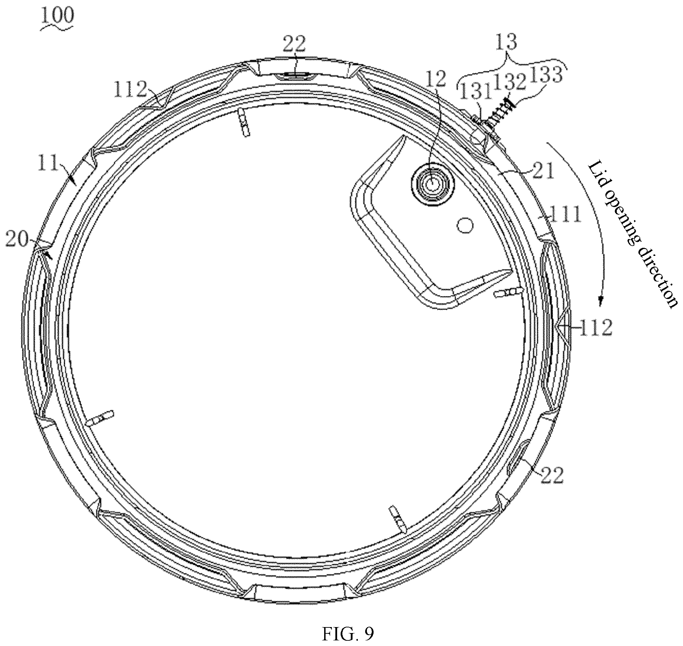

In an embodiment, as illustrated in FIG. 8 and FIG. 9, in response to the pot lid 11 and the pot body 20 being screwed and buckled in place and the generation of the air pressure inside the cooking device 100 causes the float 121 to float up, the position of the sliding block assembly 13 is as illustrated in FIG. 9. At this time, since the sliding block assembly 13 is prevented by the float assembly 12 from moving outwards in the radial direction of the pot lid 11, the side edge of the second pot tooth 21 of the pot body 20 is enabled to block the pin shaft 132, resulting in an inability of the sliding block assembly 13 to move in a lid opening direction. In this way, the pot lid 11 is unable to rotate for opening the lid in the lid opening direction. Further, it plays the role of locking the pot lid 11 and prevents consumers from opening the lid when the cooking device 100 is in the pressure state. Therefore, the safety is good.

In an embodiment, as illustrated in FIG. 10, when the pot lid 11 is aligned and buckled with the pot body 20, the at least two first fool-proof structures 112 and the at least two second fool-proof structures 22 are in one-to-one cooperation. At this time, no air pressure is generated inside the cooking device 100, allowing the float assembly 12 to be movably connected to the sliding block assembly 13. In this way, the pot lid 11 can be rotated by a predetermined angle in the lid locking direction. When the pin shaft 132 is in contact with the second pot tooth 21, the pin shaft 132 moves outwards to avoid the second pot tooth 21, i.e., it can be ensured that the pot lid 11 and the pot body 20 are screwed and locked within a predetermined angle, to improve the safety of the cooking device 100. The lid locking direction is opposite to the lid opening direction in FIG. 9.

In an embodiment, the elastic member 133 may be a spring and may be sleeved on the pin shaft 132, which can improve flexibility of a radial movement of the sliding block assembly 13 along the center of the pot lid 11, ensuring that the pot lid 11 can rotate freely in response to no pressure being generated in the cooking device 100.

Referring to FIG. 1, FIG. 2, FIG. 3, and FIG. 11, according to the invention, the pot lid assembly 10 comprises a top lid 14. The cooking device comprises a main body 30. The top lid 14 is configured to cover on and be connected to the pot lid 11. The main body 30 is sleeved on the pot body 20. The top lid 14 has a protruding portion 141. In a circumferential direction of the pot lid 11, a first angle D1 and a second angle D2 are defined by two connection lines respectively between two adjacent first fool-proof structures 112 in the at least two first fool-proof structures 112 and a center of the pot lid 11. The first angle D1 is smaller than the second angle D2, and the protruding portion 14 is arranged in a region within the first angle D1. The main body 30 has a position-limiting groove 31. In response to the pot lid 11 being correctly buckled with the pot body 20, the protruding portion 141 is movably inserted in the position-limiting groove 31 to limit a rotation angle of the pot lid 11 in a range of (0°,30°].

In this way, it is ensured that the pot lid 11 is screwed and locked or opened at a predetermined angle, which is safe and practical.

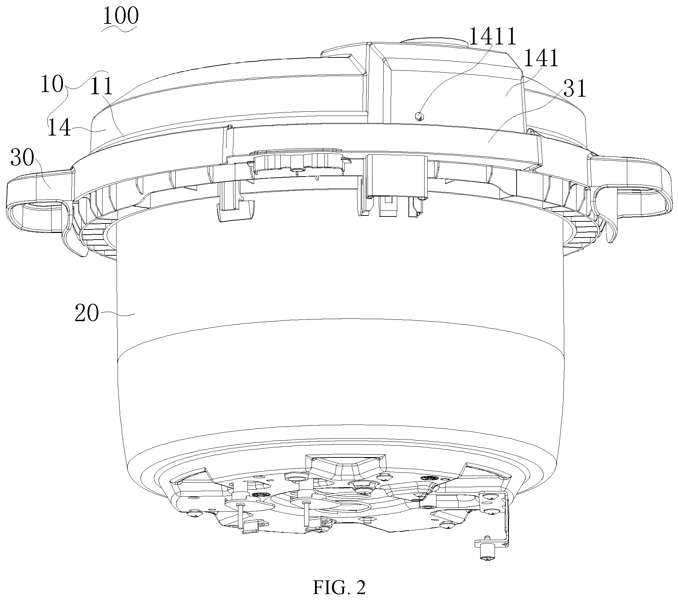

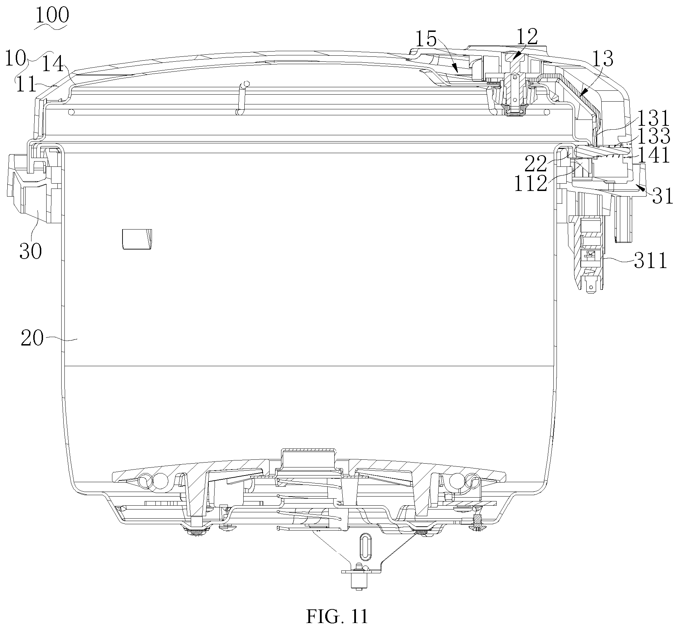

In an exemplary embodiment of the present disclosure, in an embodiment, as illustrated in FIG. 2 and FIG. 11, the protruding portion 141 is arranged in a circumferential direction of the top lid 14 and is in a square shape, to be matched and inserted with the position-limiting groove 31 arranged in a circumferential direction of the main body 30, enabling the protruding portion 141 and the position-limiting groove 31 to be each located in the region within the first angle D1. In this way, it is ensured that the at least two first fool-proof structures 112 are better driven by the protruding portion 141 and the position-limiting groove 31 when screwing together to respectively abut against the second pot teeth 21, which further ensures that the pot lid 11 and the pot body 20 are screwed and buckled in place.

The position-limiting groove 31 is arranged in an arc shape in the circumferential direction of the pot lid 11, i.e., the protruding portion 141 and the position-limiting groove 31 are movably connected to each other and rotate in a circumferential direction of the cooking device 100 to ensure screwing or opening of the pot lid 11.

It can be understood that the top lid 14 is configured to cover on and be connected to the pot lid 11 and has a protruding portion 141, and the main body 30 is sleeved on the pot body 20 and has a position-limiting groove 31, enabling the protruding portion 141 and the position-limiting groove 31 to be engaged and connected with each other and to rotate at a predetermined angle. In this way, in-place screwing and opening of the pot lid 11 and the pot body 20 are ensured.

According to the present invention, the rotation angle of the pot lid 11 is in a range of (0°, 30°], which can ensure that the at least two first fool-proof structures 112 and the at least two second fool-proof structures 22 are switched between an alignment and buckling state and a screwing and locking state, which improves efficiency of lid opening or lid locking, and is good in practicability.

For example, in an example, as illustrated in FIG. 2, the cooking device 100 may set the protruding portion 141 to be in the screwing and locking state when the protruding portion 141 is located at the rightmost end of the position-limiting groove 31, and set the protruding portion 141 to be in the alignment and buckling state when the protruding portion 141 is located at the leftmost end of the position-limiting groove 31, to ensure a lid locking process or lid opening process of the cooking device 100, improving the safety of the cooking device 100.

In another example, the cooking device 100 may also set an arrangement where the protruding portion 141 is arranged at the leftmost end of the position-limiting groove 31 as being in the screwing and locking state and set an arrangement where the protruding portion 141 is arranged at the rightmost end of the position-limiting groove 31 as being in the alignment and buckling state, which is not limited herein.

In other embodiments, a lid locking position or lid opening position of the cooking device 100 may also be set at any two angles in the range of (0°, 30°) to ensure the safe and stable operation of the cooking device 100, which is not limited herein.

In an embodiment, the main body 30 may be fixed to the pot body 20 through an interference-fit connection, welding, or other manners, and may be configured to support and be connected to the pot lid 11 to cover on and to be connected to the pot body 20, improving the stability of the cooking device 100.

Referring to FIG. 3, in some embodiments, the two connection lines are a first connection line L1 and a second connection line L2. A connection line between the protruding portion 141 and the center of the pot lid 11 is a third connection line L3. An angle comprised between the first connection line L1 and the third connection line L3 is a third angle B, and an angle comprised between the second connection line L2 and the third connection line L3 is a fourth angle C. The third angle B is equal to or unequal to the fourth angle C.

In this way, it is ensured that the protruding portion 141 and the two adjacent first fool-proof structures 112 are arranged at an acute angle, to enhance the fool-proof effect of the at least two first fool-proof structures 112.

In an exemplary embodiment of the present disclosure, in an embodiment, the third angle B is equal to the fourth angle C, enabling the protruding portion 141 to be arranged in the middle of the two adjacent first fool-proof structures 112. In this way, it is ensured that the two adjacent first fool-proof structures 112 are better driven by the protruding portion 141 to be screwed and buckled in place and to have good uniformity in response to the pot lid 11 being correctly buckled with the pot body 20.

In another embodiment, the third angle B is unequal to the fourth angle C, enabling the protruding portion 141 to be arranged close to one of the two adjacent first fool-proof structures 112 and to be located within a range of (45°, 180°) of the first angle D1, which can ensure that the two adjacent first fool-proof structures 112 are safely driven by the protruding portion 141 to be screwed and buckled in place, ensuring the fool-proof effect of the at least two first fool-proof structures 112.

In conclusion, the third angle B is equal to or unequal to the fourth angle C, and the protruding portion 141 is located within the range of (45°, 180°) of the first angle D1, which can ensure that the protruding portion 141 is respectively arranged at an acute angle with the two adjacent first fool-proof structures 112, enhancing the fool-proof effect of the at least two first fool-proof structures 112.

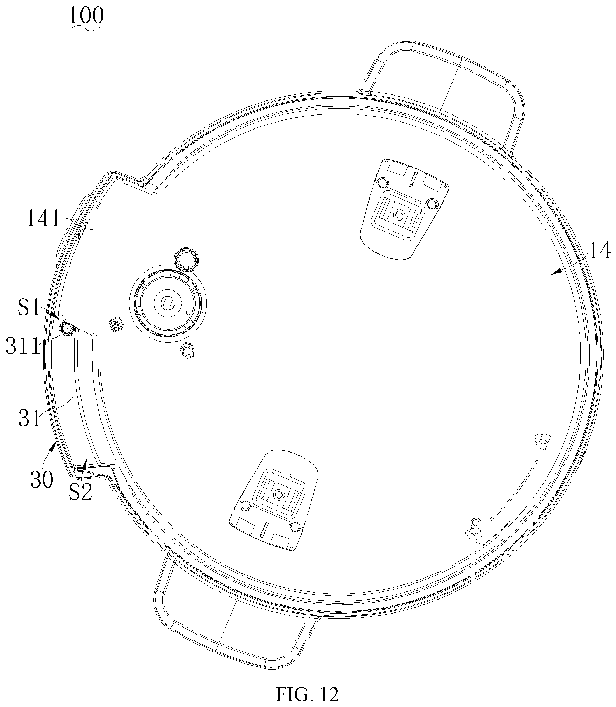

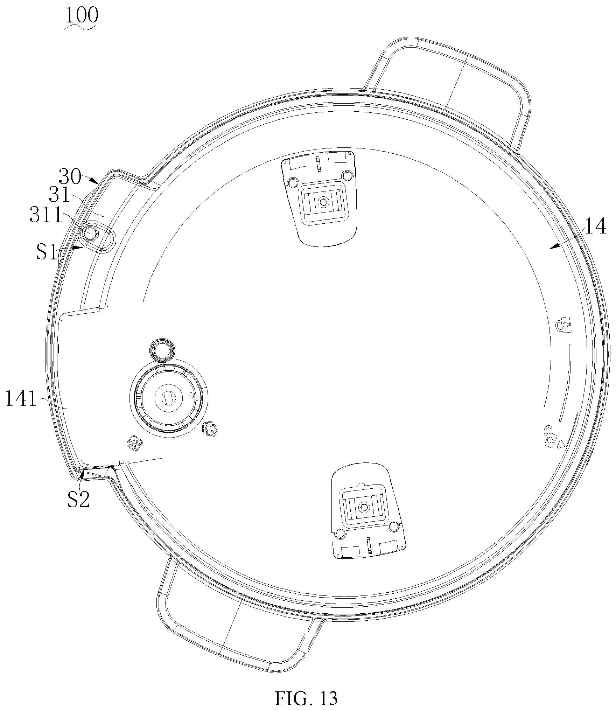

Referring to FIG. 12 and FIG. 13, according to the present invention, the position-limiting groove 31 has a first position S1 and a second position S2 that are arranged in the circumferential direction of the pot lid 11. According to the invention, the position-limiting groove 31 has a trigger key 311 provided therein. The protruding portion 141 is located at the first position S1 and the trigger key 311 is pressed by the protruding portion 141 in response to the pot lid 11 being buckled with the pot body 20 by using the one-to-one cooperation between at least two first fool-proof structures 112 and at least two second fool-proof structures 22. The protruding portion 141 is located at the second position S2 and the trigger key 311 is released from the protruding portion 141 in response to the pot lid 11 and the pot body 20 being screwed and buckled in place.

In this way, the cooking safety is improved, and a user' use experience is ensured.

In an exemplary embodiment of the present disclosure, in an embodiment, as illustrated in FIG. 12, the first position S1 may be a position where the protruding portion 141 is located in the position-limiting groove 31 in response to the pot lid 11 being aligned and buckled with the pot body 20, which can improve the fool-proof effect of the at least two first fool-proof structures 112 and the fool-proof effect of the at least two second fool-proof structures 22.

That is, when the protruding portion 141 is at the first position S1, it is indicated that the at least two first fool-proof structures 112 and the at least two second fool-proof structures 22 are in one-to-one cooperation to enable the pot lid 11 to be buckled with the pot body 20. Meanwhile, it is ensured that the protruding portion 141 is located in the position-limiting groove 31 to limit the rotation angle of the pot lid 11. In this way, it is ensured that the pot lid 11 can be screwed and buckled in place with the pot body 20 by rotating at a predetermined angle. Therefore, cooking safety is ensured.

In an embodiment, as illustrated in FIG. 13, the second position S 2 may be a position where the protruding portion 141 is in the position-limiting groove 31 in response to the pot lid 11 and the pot body 20 being screwed and buckled in place, which can ensure the safe operation of the cooking device 100.

According to the present invention, as illustrated in FIG. 12 and FIG. 13, the trigger key 311 is arranged in the position-limiting groove 31 and is arranged close to the first position S1. In this way, when the protruding portion 141 is located at the first position S1, the trigger key 311 is pressed to control the cooking device 100 not to operate. Moreover, the trigger key 311 is released when the protruding portion 141 is located at the second position S2 to control the cooking device 100 to start operation. Therefore, the cooking safety is ensured.

That is, when at least one pair of the at least two first fool-proof structures 112 and the at least two second fool-proof structures 22 are not matched and aligned in place, the trigger key 311 cannot be pressed by the protruding portion 141, and the user is prompted through display or sound (for example, continuously buzzing for 5 seconds) of a display screen (not shown) of the cooking device 100, and heating is automatically stopped, which enables the user to distinguish a case where error buckling occurs in the pot lid 11 and the pot body 20. In this way, adjustment is performed for correct buckling, to ensure the safe operation of the cooking device 100.

When the at least two first fool-proof structures 112 and the at least two second fool-proof structures 22 are aligned and matched in place, the trigger key 311 is pressed by the protruding portion 141, and the user is prompted through the display or sound (for example, buzzing for 1 second) of the display screen (not shown) of the cooking device 100. In this way, it is prompted the user that buckling is correct and screwing can be performed.

When the pot lid 11 and the pot body 20 are screwed and buckled in place, during pressing of the trigger key 311 by the protruding portion 141 to pressing cancel of the trigger key 311 by the protruding portion 141, the user is prompted through the display or sound (for example, intermittent buzzing for 3 seconds) of the display screen (not shown) of the cooking device 100 that screwing is in place and a cooking mode can be started.

In an embodiment, the trigger key 311 may be a microswitch or another type of switch to ensure safe cooking, which is not limited herein.

In conclusion, the top lid 14 may only move within 30 degrees where the position-limiting groove 31 of the main body 30 is located, i.e., when the pot lid 11 is placed into the pot body 20, the trigger key 311 is pressed until the pot lid 11 and the pot body 20 are completely screwed and buckled in place and then the trigger key 311 is released, which ensures the cooking safety and improves the user's use experience.

Referring to FIG. 1 and FIG. 2, in some embodiments, the pot lid 11 has a first through hole 115, and the protruding portion 141 has a second through hole 1411. The pot lid assembly 10 comprises a connecting member (not shown). The connecting member penetrates and connects the first through hole 115 and the second through hole 1411, to fixedly connect the top lid 14 to the pot lid 11.

In this way, it is ensured that the top lid 14 is stably connected to the pot lid 11. Therefore, opening or screwing of the pot lid 11 is facilitated.

In an exemplary embodiment of the present disclosure, in an embodiment, the connector (not shown) may be a screw and a nut configured to fix the top lid 14 and the pot lid 11, which enables the pot lid assembly 10 to rotate at a predetermined angle on the pot body 20 with good stability.

It can be understood that, as illustrated in FIG. 1 and FIG. 2, in response to the top lid 14 covering on the pot lid 11, the second through hole 1411 is aligned with the first through hole 115, enabling the connecting member to sequentially penetrate the second through hole 1411 to be connected and fixed to the first through hole 115, and ensuring that the top lid 14 is stably connected to the pot lid 11.

In another embodiment, the connecting member may also sequentially penetrate the first through hole 115 to be connected and fixed to the second through hole 1411, to ensure normal screwing or lid opening of the pot lid assembly 10, which is not limited herein.

In other embodiments, the connecting member may also be another fixing member, enabling the pot lid assembly 10 to be fixedly connected, which is not limited herein.

Referring to FIG. 11, in some embodiments, the pot lid assembly 10 comprises a top lid 14. The top lid 14 is configured to cover on and be connected to the pot lid 11. An accommodation space 15 is formed between the top lid 14 and the pot lid 11. The accommodation space 15 is configured to accommodate the sliding block assembly 12 and the float assembly 13.

In this way, the pot lid assembly 10 forms a closed space to ensure safe operation of the sliding block assembly 12 and safe operation of the float assembly 13.

In an exemplary embodiment of the present disclosure, in an embodiment, as illustrated in FIG. 11, the top lid 14 may be a protection lid and may be configured to cover on and be connected to the pot lid 11, to form a sealed accommodation space 15 with good safety.

It can be understood that, with reference to FIG. 1 and FIG. 11, the sliding block assembly 12 and the float assembly 13 are arranged in the accommodation space 15 to ensure that the sliding block assembly 12 and the float assembly 13 operate safely, which enables the pot lid 11 and the pot body 20 to be normally aligned and buckled in place and screwed tightly, preventing a user's mistaken touching caused by explosion of the sliding block assembly 12 and explosion of the float assembly 13 from the cooking device 100 from causing a decline in the fool-proof effect and self-locking function.

Although embodiments of the present disclosure have been illustrated and described, it is conceivable for those of ordinary skill in the art that various changes, modifications, replacements, and variations can be made to these embodiments without departing from the scope of the present disclosure which defined by the appended claims.

## Claims

1. A cooking device (100), comprising:
a pot lid assembly (10) comprising a pot lid (11) having a plurality of first pot teeth (111), wherein at least two of the plurality of first pot teeth (111) are each formed with a first fool-proof structure (112); and
a pot body (20) having a plurality of second pot teeth (21), wherein at least two of the plurality of second pot teeth (21) are each formed with a second fool-proof structure (22),
wherein the cooking device (100) enables the pot lid (11) to be buckled with the pot body (20) by using a one-to-one cooperation between at least two first fool-proof structures (112) and at least two second fool-proof structures (22); and
the pot lid assembly (10) comprises a top lid (14) to cover on and be connected to the pot lid (11), the top lid (14) having a protruding portion (141);
the cooking device (100) comprises a main body (30) sleeved on the pot body (20) and having a position-limiting groove (31);
in a circumferential direction of the pot lid (11), a first angle (D1) and a second angle (D2) are respectively defined by two connection lines between two adjacent first fool-proof structures (112) and a center of the pot lid (11), the first angle (D1) being smaller than the second angle (D2), and the protruding portion (141) being arranged in a region within the first angle (D1); and
when the pot lid (11) being correctly buckled with the pot body (20), the protruding portion (141) is movably inserted in the position-limiting groove (31) to limit a rotation angle of the pot lid (11); and
the position-limiting groove (31) has a first position (S1) and a second position (S2) that are arranged in the circumferential direction of the pot lid (11);
said cooking device being **characterised in that** the rotation angle of the pot lid is in a range of [0°- 30°]; and
the position-limiting groove (31) has a trigger key provided therein (311);
the protruding portion (141) is located at the first position (S1) and the trigger key (311) is pressed by the protruding portion (141) when the pot lid (11) being buckled with the pot body (20) by using the one-to-one cooperation between at least two first fool-proof structures (112) and at least two second fool-proof structures (22); and
the protruding portion (141) is located at the second position (S2) and the trigger key (311) is released from the protruding portion (141) when the pot lid (11) and the pot body (20) being rotated in and buckled in place.

2. The cooking device (100) according to claim 1, wherein:
each of the at least two first fool-proof structures (112) comprises one of a fool-proof rib and a fool-proof notch; and
each of the at least two second fool-proof structures (22) comprises the other one of the fool-proof rib and the fool-proof notch.

3. The cooking device (100) according to claim 1, wherein in a circumferential direction of the pot lid (11), a first angle (D1) and a second angle (D2) are respectively defined by two connection lines between two adjacent first fool-proof structures (112) and a center of the pot lid (11), the first angle (D1) being smaller than the second angle (D2), and the first angle (D1) being in a range of (45°, 180°).

4. The cooking device (100) according to claim 1, wherein each of the at least two first fool-proof structures (112) is arranged in an intermediate position of a corresponding first pot tooth (111) of the plurality of first pot teeth (111).

5. The cooking device (100) according to claim 1, wherein:
a radial distance between an inner edge of the pot lid (11) and an outer edge of the pot body (20) is H1;
the at least two first fool-proof structures (112) are arranged in a radial direction of a center of the pot lid (11); and
a radial length of each of the at least two first fool-proof structures (112) is H2, wherein H2>2×H1.

6. The cooking device (100) according to claim 1, wherein when the pot lid (11) being buckled with the pot body (20) by using the one-to-one cooperation between the at least two first fool-proof structures (112) and the at least two second fool-proof structures (22):
a gap between a first fool-proof structure (112) of the at least two first fool-proof structures (112) and a second pot tooth (21) of the at least two second fool-proof structures (22) adjacent to the first fool-proof structure (112) in a rotation direction of the pot lid (11) is H3; and
a gap between a first pot tooth (111) and a second pot tooth (21) adjacent to the respective first pot tooth (111) in the rotation direction of the pot lid (11) is H4, wherein H4>H3.

7. The cooking device (100) according to claim 1, wherein:
the two connection lines are a first connection line (L1) and a second connection line (L2);
a connection line between the protruding portion (141) and the center of the pot lid (11) is a third connection line (L3); and
an angle included between the first connection line (L1) and the third connection line (L3) is a third angle (B), and an angle included between the second connection line (L2) and the third connection line (L3) is a fourth angle (C), the third angle (B) being equal to or unequal to the fourth angle (C).

8. The cooking device (100) according to claim 1, wherein:
the pot lid (11) has a first through hole (115), and the protruding portion (141) has a second through hole (1411);
the pot lid assembly (10) comprises a connecting member, the connecting member penetrating and connecting the first through hole (115) and the second through hole (1411), to fixedly connect the top lid (14) to the pot lid (11).

9. The cooking device (100) according to claim 1, wherein:
the pot lid assembly (10) comprises a float assembly (13) and a sliding block assembly (12) that are arranged on the pot lid (11), the float assembly (13) comprising a float (121), the sliding block assembly (12) comprising a pin shaft (132) and a connection plate (131) connected to the pin shaft (132), the pin shaft (132) being connected to the pot body (20) to limit the pot lid (11) from rotating;
the cooking device (100) is configured to be that: when the float (121) being bumped up, the float (121) is connected to the connection plate (131) to prevent the pin shaft (132) from being disengaged from the pot body (20); and
in a circumferential direction of the pot lid (11), a first angle (D1) and a second angle (D2) are respectively defined by two connection lines between two adjacent first fool-proof structures (112) and a center of the pot lid (11), the first angle (D1) being smaller than the second angle (D2), and the float assembly (13) and the sliding block assembly (12) being in a region within the first angle (D1).

10. The cooking device (100) according to claim 9, wherein:
the float assembly (13) further comprises a sealing pad (122);
the float (121) has a first groove (1211), a first protruding block (1212), a second protruding block (1213), and a second groove (1214) that are sequentially arranged in a first direction, the sealing pad (122) being sleeved in the second groove (1214);
the pot lid (11) has a third through hole (113) formed at an upper portion of the pot lid (11), the float (121) movably penetrating the third through hole (113), to enable the second protruding block (1213) to be at least partially arranged in the third through hole (113); and
the connection plate (131) has a groove hole (1311) formed at an end of the connection plate (131), a top of the float (121) penetrating the groove hole (1311), the first groove (1211) being in the groove hole (1311), and the first protruding block (1212) being embedded in the groove hole (1311) when the float (121) being bumped up, to limit a movement of the connection plate (131) relative to the pot body (20).

11. The cooking device (100) according to claim 9, wherein:
the sliding block assembly (12) further comprises an elastic member (133);
the connection plate (131) has a groove hole (1311) formed at an end of the connection plate (131);
the elastic member (133) is sleeved at an end of the pin shaft (132) away from the groove hole (1311) and abuts against the connection plate (131);
the pot lid (11) has a fourth through hole (114) formed at a side portion of the pot lid (11), an end of the pin shaft (132) close to the groove hole (1311) penetrating the fourth through hole (114);
the pin shaft (132) abuts against a side edge of a second pot tooth (21) of the plurality of second pot teeth (21) when the pot lid (11) being correctly buckled with the pot body (20); and
when the float (121) being bumped up, the pin shaft (132) is position-limited and fixed to a second pot tooth (21) of the plurality of second pot teeth (21) to limit the pot lid (11) from rotating; and
when the float (121) being not bumped up and the pot lid (11) rotating, the pin shaft (132) moves away from the second pot tooth (21) of the plurality of second pot teeth (21) by the elastic member (133).

12. The cooking device (100) according to claim 9, wherein the pot lid assembly (10) comprises a top lid (14) covering and being connected to the pot lid (11), an accommodation space (15) being formed between the top lid (14) and the pot lid (11), and the accommodation space (15) accommodating the sliding block assembly (12) and the float assembly (13).

## Patentansprüche

1. Kochvorrichtung (100), umfassend:
eine Topfdeckelanordnung (10) umfassend einen Topfdeckel (11) aufweisend eine Vielzahl von ersten Topfzähnen (111), wobei mindestens zwei der Vielzahl von ersten Topfzähnen (111) jeweils mit einer ersten ausfallsicheren Struktur (112) ausgebildet sind; und
einen Topfkörper (20) aufweisend eine Vielzahl von zweiten Topfzähnen (21), wobei mindestens zwei der Vielzahl von zweiten Topfzähnen (21) jeweils mit einer zweiten ausfallsicheren Struktur (22) ausgebildet sind,
wobei die Kochvorrichtung (100) es dem Topfdeckel (11) ermöglicht, mit dem Topfkörper (20) eingerastet zu werden, indem eine Eins-zu-Eins-Zusammenwirkung zwischen mindestens zwei ersten ausfallsicheren Strukturen (112) und mindestens zwei zweiten ausfallsicheren Strukturen (22) verwendet wird; und
die Topfdeckelanordnung (10) einen oberen Deckel (14) umfasst, um den Topfdeckel (11) abzudecken und mit diesem verbunden zu werden, wobei der obere Deckel (14) einen vorstehenden Bereich (141) aufweist;
die Kochvorrichtung (100) einen Hauptkörper (30) umfasst, der auf den Topfkörper (20) aufgeschoben ist und eine positionsbegrenzende Nut (31) aufweist;
in einer Umfangsrichtung des Topfdeckels (11) ein erster Winkel (D1) und ein zweiter Winkel (D2) jeweils durch zwei Verbindungslinien zwischen zwei benachbarten ersten ausfallsicheren Strukturen (112) und einem Mittelpunkt des Topfdeckels (11) definiert sind, wobei der erste Winkel (D1) kleiner ist als der zweite Winkel (D2) und der vorstehende Bereich (141) in einer Gegend innerhalb des ersten Winkels (D1) angeordnet ist; und
wenn der Topfdeckel (11) korrekt mit dem Topfkörper (20) verrastet ist, wird der vorstehende Bereich (141) beweglich in die Positionsbegrenzungsnut (31) eingeführt, um einen Drehwinkel des Topfdeckels (11) zu begrenzen, und
die Positionsbegrenzungsnut (31) eine erste Position (S1) und eine zweite Position (S2) aufweist, die in Umfangsrichtung des Topfdeckels (11) angeordnet sind;
wobei die Kochvorrichtung **dadurch gekennzeichnet ist, dass** der Drehwinkel des Topfdeckels in einem Bereich von [0° - 30°] liegt: und
die Positionsbegrenzungsnut (31) einen darin vorgesehenen Auslöseknopf (311) aufweist;
der vorstehende Bereich (141) an der ersten Position (S1) liegt und der Auslöseknopf (311) durch den vorstehenden Bereich (141) gedrückt wird, wenn der Topfdeckel (11) mit dem Topfkörper (20) unter Verwendung der Eins-zu-Eins-Zusammenwirkung zwischen mindestens zwei ersten fehlersicheren Strukturen (112) und mindestens zwei zweiten fehlersicheren Strukturen (22) mit dem Topfkörper (20) eingerastet wird; und
der vorstehende Bereich (141) sich an der zweiten Position (S2) befindet und der Auslöseknopf (311) vom vorstehenden Bereich (141) gelöst wird, wenn der Topfdeckel (11) und der Topfkörper (20) gedreht und eingerastet werden.

2. Kochvorrichtung (100) gemäß Anspruch 1, wobei:
jede der mindestens zwei ersten ausfallsicheren Strukturen (112) eines einer ausfallsicheren Rippe oder einer ausfallsicheren Kerbe umfasst; und
jede der mindestens zwei zweiten ausfallsicheren Strukturen (22) die andere der ausfallsicheren Rippe und der ausfallsicheren Kerbe umfasst.

3. Kochvorrichtung (100) gemäß Anspruch 1, wobei in Umfangsrichtung des Topfdeckels (11) ein erster Winkel (D1) und ein zweiter Winkel (D2) jeweils durch zwei Verbindungslinien zwischen zwei benachbarten ersten ausfallsicheren Strukturen (112) und einem Mittelpunkt des Topfdeckels (11) definiert sind, wobei der erste Winkel (D1) kleiner ist als der zweite Winkel (D2) und der erste Winkel (D1) in einem Bereich von (45°, 180°) liegt.

4. Kochvorrichtung (100) gemäß Anspruch 1, wobei jede der mindestens zwei ersten ausfallsicheren Strukturen (112) in einer Zwischenposition eines entsprechenden ersten Topfzahns (111) der Vielzahl von ersten Topfzähnen (111) angeordnet ist.

5. Kochvorrichtung (100) gemäß Anspruch 1, wobei:
ein radialer Abstand zwischen einer Innenkante des Topfdeckels (11) und einer Außenkante des Topfkörpers (20) H1 ist;
die mindestens zwei ersten ausfallsicheren Strukturen (112) in einer radialen Richtung zu einem Mittelpunkt des Topfdeckels (11) angeordnet sind; und
eine radiale Länge jeder der mindestens zwei ersten ausfallsicheren Strukturen (112) H2 ist, wobei H2 > 2 × H1 ist.

6. Kochvorrichtung (100) gemäß Anspruch 1, wobei, wenn der Topfdeckel (11) unter Verwendung der Eins-zu-Eins-Zusammenwirkung zwischen den mindestens zwei ersten ausfallsicheren Strukturen (112) und den mindestens zwei zweiten ausfallsicheren Strukturen (22) mit dem Topfkörper (20) verrastet wird:
ein Spalt zwischen einer ersten ausfallsicheren Struktur (112) der mindestens zwei ersten ausfallsicheren Strukturen (112) und einem zweiten Topfzahn (21) der mindestens zwei zweiten ausfallsicheren Strukturen (22), der in einer Drehrichtung des Topfdeckels (11) an die erste ausfallsicheren Strukturen (112) angrenzt, H3 ist; und
ein Spalt zwischen einem ersten Topfzahn (111) und einem zweiten Topfzahn (21), der in der Drehrichtung des Topfdeckels (11) an den jeweiligen ersten Topfzahn (111) angrenzt, H4 ist, wobei H4 > H3 ist.

7. Kochvorrichtung (100) gemäß Anspruch 1, wobei:
die beiden Verbindungslinien eine erste Verbindungslinie (L1) und eine zweite Verbindungslinie (L2) sind;
eine Verbindungslinie zwischen dem vorstehenden Bereich (141) und dem Mittelpunkt des Topfdeckels (11) eine dritte Verbindungslinie (L3) ist; und
ein eingeschlossener Winkel zwischen der ersten Verbindungslinie (L1) und der dritten Verbindungslinie (L3) ein dritter Winkel (B) ist und ein eingeschlossener Winkel zwischen der zweiten Verbindungslinie (L2) und der dritten Verbindungslinie (L3) ein vierter Winkel (C) ist, wobei der dritte Winkel (B) gleich oder ungleich dem vierten Winkel (C) ist.

8. Kochvorrichtung (100) gemäß Anspruch 1, wobei:
der Topfdeckel (11) ein erstes Durchgangsloch (115) aufweist und der vorstehende Bereich (141) ein zweites Durchgangsloch (1411) aufweist;
die Topfdeckelanordnung (10) ein Verbindungselement umfasst, wobei das Verbindungselement das erste Durchgangsloch (115) und das zweite Durchgangsloch (1411) durchdringt und verbindet, um den oberen Deckel (14) fest mit dem Topfdeckel (11) zu verbinden.

9. Kochvorrichtung (100) gemäß Anspruch 1, wobei:
die Topfdeckelanordnung (10) eine Schwimmeranordnung (13) und eine Gleitblockanordnung (12) umfasst, die auf dem Topfdeckel (11) angeordnet sind, wobei die Schwimmeranordnung (13) einen Schwimmer (121) umfasst, wobei die Gleitblockanordnung (12) eine Stiftwelle (132) und eine mit der Stiftwelle (132) verbundene Verbindungsplatte (131) umfasst, wobei die Stiftwelle (132) mit dem Topfkörper (20) verbunden ist, um die Drehung des Topfdeckels (11) zu begrenzen;
die Kochvorrichtung (100) so konfiguriert ist, dass: wenn der Schwimmer (121) nach oben gedrückt wird, der Schwimmer (121) mit der Verbindungsplatte (131) verbunden ist, um zu verhindern, dass sich die Stiftwelle (132) vom Topfkörper (20) löst; und
in einer Umfangsrichtung des Topfdeckels (11) ein erster Winkel (D1) und ein zweiter Winkel (D2) jeweils durch zwei Verbindungslinien zwischen zwei benachbarten ersten ausfallsicheren Strukturen (112) und einem Mittelpunkt des Topfdeckels (11) definiert sind, wobei der erste Winkel (D1) kleiner ist als der zweite Winkel (D2), und die Schwimmeranordnung (13) und die Gleitblockanordnung (12) sich in einem Bereich innerhalb des ersten Winkels (D1) befinden.

10. Kochvorrichtung (100) gemäß Anspruch 9, wobei:
die Schwimmeranordnung (13) ferner ein Dichtungskissen (122) umfasst;
der Schwimmer (121) eine erste Nut (1211), einen ersten vorstehenden Block (1212), einen zweiten vorstehenden Block (1213) und eine zweite Nut (1214) aufweist, die nacheinander in einer ersten Richtung angeordnet sind, wobei das Dichtungselement (122) in die zweite Nut (1214) eingeschoben ist;
der Topfdeckel (11) ein drittes Durchgangsloch (113) aufweist, das an einem oberen Bereich des Topfdeckels (11) ausgebildet ist, wobei der Schwimmer (121) beweglich durch das dritte Durchgangsloch (113) hindurchgeht, um dem vorstehenden Block (1213) zu ermöglichen, zumindest teilweise in dem dritten Durchgangsloch (113) angeordnet zu sein; und
die Verbindungsplatte (131) ein Nutloch (1311) aufweist, das an einem Ende der Verbindungsplatte (131) ausgebildet ist, wobei eine Oberseite des Schwimmers (121) in das Nutloch (1311) eindringt, wobei sich die erste Nut (1211) in dem Nutloch (1311) befindet und der erste vorstehende Block (1212) in das Nutloch (1311) eingebettet ist, wenn der Schwimmer (121) nach oben gedrückt wird, um eine Bewegung der Verbindungsplatte (131) relativ zum Topfkörper (20) zu begrenzen.

11. Kochvorrichtung (100) gemäß Anspruch 9, wobei:
die Gleitblockanordnung (12) ferner ein elastisches Element (133) umfasst;
die Verbindungsplatte (131) ein Nutloch (1311) aufweist, das an einem Ende der Verbindungsplatte (131) ausgebildet ist;
das elastische Element (133) an einem Ende des Stiftbolzens (132) entfernt von dem Nutloch (1311) eingeschoben ist und an der Verbindungsplatte (131) anliegt;
der Topfdeckel (11) ein viertes Durchgangsloch (114) aufweist, das an einem Seitenbereich des Topfdeckels (11) ausgebildet ist, ein Ende der Stiftwelle (132) nahe dem Nutloch (1311), das vierte Durchgangsloch (114) durchdringt;
die Stiftwelle (132) an einer Seitenkante eines zweiten Topfzahns (21) der Vielzahl von zweiten Topfzähnen (21) anliegt, wenn der Topfdeckel (11) korrekt mit dem Topfkörper (20) verrastet ist; und
wenn der Schwimmer (121) nach oben gedrückt wird, ist die Stiftwelle (132) in ihrer Position begrenzt und an einem zweiten Topfzahn (21) der Vielzahl von zweiten Topfzähnen (21) fixiert, um eine Drehung des Topfdeckels (11) zu begrenzen; und
wenn der Schwimmer (121) nicht nach oben gedrückt wird und sich der Topfdeckel (11) dreht, bewegt sich die Stiftwelle (132) durch das elastische Element (133) von dem zweiten Topfzahn (21) der Vielzahl von zweiten Topfzähnen (21) weg.

12. Kochvorrichtung (100) gemäß Anspruch 9, wobei die Topfdeckelanordnung (10) einen oberen Deckel (14) umfasst, der den Topfdeckel (11) abdeckt und mit diesem verbunden ist, wobei zwischen dem oberen Deckel (14) und dem Topfdeckel (11) ein Aufnahmeraum (15) ausgebildet ist, und der Aufnahmeraum (15) die Gleitblockanordnung (12) und die Schwimmeranordnung (13) aufnimmt.

## Revendications

1. Dispositif de cuisson (100), comprenant :
un ensemble couvercle de marmite (10) comprenant un couvercle de marmite (11) présentant une pluralité de premières dents de marmite (111), dans lequel au moins deux de la pluralité de premières dents de marmite (111) sont chacune formées d'une première structure fiable (112) ; et
un corps de marmite (20) ayant une pluralité de secondes dents de marmite (21), dans lequel au moins deux de la pluralité de secondes dents de marmite (21) sont chacune formées d'une seconde structure fiable (22),
dans lequel le dispositif de cuisson (100) permet au couvercle de marmite (11) d'être attaché au corps de marmite (20) au moyen d'une coopération biunivoque entre au moins deux premières structures fiables (112) et au moins deux secondes structures fiables (22) ; et
l'ensemble couvercle de marmite (10) comprend un couvercle supérieur (14) destiné à recouvrir et à être relié au couvercle de marmite (11), le couvercle supérieur (14) présentant une partie en saillie (141) ;
le dispositif de cuisson (100) comprend un corps principal (30) emmanché sur le corps de marmite (20) et présentant une rainure de limitation de position (31) ;
dans une direction circonférentielle du couvercle de marmite (11), un premier angle (D1) et un deuxième angle (D2) sont respectivement définis par deux lignes de liaison entre deux premières structures fiables (112) et un centre du couvercle de marmite (11), le premier angle (D1) étant inférieur au deuxième angle (D2), et la partie en saillie (141) étant agencée dans une région à l'intérieur du premier angle (D1) ; et
lorsque le couvercle de marmite (11) est correctement attaché au corps de marmite (20), la partie en saillie (141) est insérée de façon mobile dans la rainure de limitation de position (31) pour limiter un angle de rotation du couvercle de marmite (11) ; et
la rainure de limitation de position (31) présente une première position (S1) et une seconde position (S2) qui sont agencées dans la direction circonférentielle du couvercle de marmite (11) ;
ledit dispositif de cuisson étant **caractérisé en ce que** l'angle de rotation du couvercle de marmite est dans une plage de [0° à 30°] ; et
la rainure de limitation de position (31) a une clé de déclenchement (311) disposée en son sein ;
la partie en saillie (141) est située au niveau de la première position (S1) et la clé de déclenchement (311) est pressée par la partie en saillie (141) lorsque le couvercle de marmite (11) est attaché au corps de marmite (20) au moyen de la coopération biunivoque entre au moins deux premières structures fiables (112) et au moins deux secondes structures fiables (22) ; et
la partie en saillie (141) est située au niveau de la seconde position (S2) et la clé de déclenchement (311) est libérée de la partie en saillie (141) lorsque le couvercle de marmite (11) et le corps de marmite (20) sont tournés et attachés en position.

2. Dispositif de cuisson (100) selon la revendication 1, dans lequel :
chacune des au moins deux premières structures fiables (112) comprend une nervure fiable et une encoche fiable ; et
chacune des au moins deux secondes structures fiables (22) comprend l'autre de la nervure fiable et de l'encoche fiable.

3. Dispositif de cuisson (100) selon la revendication 1, dans lequel dans une direction circonférentielle du couvercle de marmite (11), un premier angle (D1) et un deuxième angle (D2) sont respectivement définis par deux lignes de liaison entre deux premières structures fiables (112) adjacentes et un centre du couvercle de marmite (11), le premier angle (D1) étant inférieur au deuxième angle (D2), et le premier angle (D1) étant dans une plage de (45°, 180°).

4. Dispositif de cuisson (100) selon la revendication 1, dans lequel chacune des au moins deux premières structures fiables (112) est agencée dans une position intermédiaire d'une première dent de marmite (111) correspondante de la pluralité de premières dents de marmite (111).

5. Dispositif de cuisson (100) selon la revendication 1, dans lequel :
une distance radiale entre un bord interne du couvercle de marmite (11) et un bord externe du corps de marmite (20) est H1 ;
les au moins deux premières structures fiables (112) sont agencées dans une direction radiale d'un centre du couvercle de marmite (11) ; et
une longueur radiale de chacune des au moins deux premières structures fiables (112) est H2, dans lequel H2>2xH1.

6. Dispositif de cuisson (100) selon la revendication 1, dans lequel lorsque le couvercle de marmite (11) est attaché au corps de marmite (20) au moyen de la coopération biunivoque entre les au moins deux premières structures fiables (112) et les au moins deux secondes structures fiables (22) ;
un espace entre une première structure fiable (112) des au moins deux premières structures fiables (112) et une seconde dent de marmite (21) des au moins deux secondes structures fiables (22) adjacentes à la première structure fiable (112) dans une direction de rotation du couvercle de marmite (11) est H3 ; et
un espace entre une première dent de marmite (111) et une seconde dent de marmite (21) adjacente à la première dent de marmite (111) respective dans la direction de rotation du couvercle de marmite (11) est H4, dans lequel H4>H3.

7. Dispositif de cuisson (100) selon la revendication 1, dans lequel :
les deux lignes de liaison sont une première ligne de liaison (L1) et une deuxième ligne de liaison (L2) ;
une ligne de liaison entre la partie en saillie (141) et le centre du couvercle de marmite (11) est une troisième ligne de liaison (L3) ;
un angle inclus entre la première ligne de liaison (L1) et la troisième ligne de liaison (L3) est un troisième angle (B), et un angle inclus entre la deuxième ligne de liaison (L2) et la troisième ligne de liaison (L3) est un quatrième angle (C), le troisième angle (B) étant égal ou inégal au quatrième angle (C).

8. Dispositif de cuisson (100) selon la revendication 1, dans lequel :
le couvercle de marmite (11) présente un premier trou traversant (115), et la partie en saillie (141) présente un deuxième trou traversant (1411) ;
l'ensemble couvercle de marmite (10) comprend un élément de liaison, l'élément de liaison pénétrant dans et reliant le premier trou traversant (115) et le deuxième trou traversant (1411), pour relier fixement le couvercle supérieur (14) au couvercle de marmite (11).

9. Dispositif de cuisson (100) selon la revendication 1, dans lequel :
l'ensemble couvercle de marmite (10) comprend un ensemble flotteur (13) et un ensemble bloc coulissant (12) qui sont agencés sur le couvercle de marmite (11), l'ensemble flotteur (13) comprenant un flotteur (121), l'ensemble bloc coulissant (12) comprenant un axe de broche (132) et une plaque de liaison (131) reliée à l'axe de broche (132), l'axe de broche (132) étant relié au corps de marmite (20) pour limiter la rotation du couvercle de marmite (11) ;
le dispositif de cuisson (100) est configuré de sorte que : lorsque le flotteur (121) est remonté, le flotteur (121) est relié à la plaque de liaison (131) pour empêcher que l'axe de broche (132) ne se désolidarise du corps de couvercle (20) ; et
dans une direction circonférentielle du couvercle de marmite (11), un premier angle (D1) et un deuxième angle (D2) sont respectivement définis par deux lignes de liaison entre deux premières structures fiables (112) et un centre du couvercle de marmite (11), le premier angle (D1) étant inférieur au deuxième angle (D2), et l'ensemble flotteur (13) et l'ensemble bloc coulissant (12) étant dans une région à l'intérieur du premier angle (D1).

10. Dispositif de cuisson (100) selon la revendication 9, dans lequel :
l'ensemble flotteur (13) comprend en outre un tampon d'étanchéité (122) ;
le flotteur (121) présente une première rainure (1211), un premier bloc en saillie (1212), un second bloc en saillie (1213), et une seconde rainure (1214) qui sont séquentiellement agencés dans une première direction, le tampon d'étanchéité (122) étant emmanché dans la seconde rainure (1214) ;
le couvercle de marmite (11) présente un troisième trou traversant (113) formé au niveau d'une partie supérieure du couvercle de marmite (11), le flotteur (121) pénétrant de façon mobile dans le troisième trou traversant (113), pour permettre au second bloc en saillie (1213) d'être au moins partiellement agencé dans le troisième trou traversant (113) ; et
la plaque de liaison (131) présente un trou de rainure (1311) formé au niveau d'une extrémité de la plaque de liaison (131), un sommet du flotteur (121) pénétrant dans le trou de rainure (1311), la première rainure (1211) étant dans le trou de rainure (1311), et le premier bloc en saillie (1212) étant incorporé dans le trou de rainure (1311) lorsque le flotteur (121) est remonté, pour limiter un mouvement de la plaque de liaison (131) par rapport au corps de marmite (20).

11. Dispositif de cuisson (100) selon la revendication 9, dans lequel :
l'ensemble bloc coulissant (12) comprend en outre un élément élastique (133) ;
la plaque de liaison (131) présente un trou de rainure (1311) formé au niveau d'une extrémité de la plaque de liaison (131) ;
l'élément élastique (133) est emmanché au niveau d'une extrémité de l'axe de broche (132) éloignée du trou de rainure (1311) et vient buter contre la plaque de liaison (131) ;
le couvercle de marmite (11) présente un quatrième trou traversant (114) formé au niveau d'une partie latérale du couvercle de marmite (11), une extrémité de l'axe de broche (132) à proximité du trou de rainure (1311) pénétrant dans le quatrième trou traversant (114) ;
l'axe de broche (132) vient buter contre un bord latéral d'une seconde dent de marmite (21) de la pluralité de secondes dents de marmite (21) lorsque le couvercle de marmite (11) est correctement attaché au corps de marmite (20) ; et
lorsque le flotteur (121) est remonté, l'axe de broche (132) est limité en position et fixé à une seconde dent de marmite (21) de la pluralité de secondes dents de marmite (21) pour limiter la rotation du couvercle de marmite (11) ; et
lorsque le flotteur (121) n'est pas remonté et que le couvercle de marmite (11) tourne, l'axe de broche (132) s'éloigne de la seconde dent de marmite (21) de la pluralité de secondes dents de marmite (21) par l'élément élastique (133).

12. Dispositif de cuisson (100) selon la revendication 9, dans lequel l'ensemble couvercle de marmite (10) comprend un couvercle supérieur (14) recouvrant le et relié au couvercle de marmite (11), un espace de réception (15) formé entre le couvercle supérieur (14) et le couvercle de marmite (11), l'espace de réception (15) recevant l'ensemble bloc coulissant (12) et l'ensemble flotteur (13).
